# FASCICULE DE BREVET EUROPEEN

(11) **EP 0 990 204 B1**
(45) Date de publication et mention de la délivrance du brevet: **14.05.2008**
(21) Numéro de dépôt: 99913410.9
(22) Date de dépôt: 14.04.1999
(51) Int. Cl.: G06F 9/445

(54) **CARTE A PUCE COMPRENANT DES MOYENS POUR GERER UNE MEMOIRE VIRTUELLE, PROCEDE ET PROTOCOLE DE COMMUNICATION ASSOCIES**
CHIPKARTE MIT MITTELN ZUR VERWALTUNG EINES VIRTUELLEN SPEICHERS, ENTSPRECHENDES KOMMUNIKATIONSVERFAHREN UND -PROTOKOLL
CHIP CARD COMPRISING MEANS FOR MANAGING A VIRTUAL MEMORY, ASSOCIATED COMMUNICATION METHOD AND PROTOCOL

(30) Priorité: 15.04.1998 FR 9804693
(43) Date de publication de la demande: 05.04.2000
(73) Titulaire: CP8 TECHNOLOGIES, 78431 Louveciennes (FR)
(72) Inventeur: NASSOR, Azad, F-78450 Villepreux (FR)
(74) Mandataire: Cour, Pierre
(86) Numéro de dépôt international: PCT/FR1999/000877
(87) Numéro de publication internationale: WO 1999/053401

(56) Documents cités:
- EP-A- 0 282 992
- EP-A- 0 626 664
- EP-A- 0 811 911
- FR-A- 2 736 735
- US-A- 5 634 058
- US-A- 5 737 585

## Description

La présente invention concerne une carte à puce comprenant des moyens pour gérer une mémoire virtuelle.

Depuis une vingtaine d'année, la carte à puce prend une grande place dans la vie courante. Le domaine bancaire s'est intéressé le premier aux cartes à microcircuit : leur principal avantage est de diminuer la fraude. Les sociétés de télévision à péage et de radiotéléphonie les utilisent comme moyen de génération des clés qui servent à chiffrer et déchiffrer des émissions cryptées. Pour garantir la sécurité, il a fallu créer une nouvelle architecture de circuit intégré. Les cartes de type porte-monnaie électronique contiennent une somme d'argent électronique ; d'autres cartes, dites de fidélité, procurent des avantages financiers à leurs propriétaires.

On le voit, les appareils en relation avec des cartes à microcircuit et plus particulièrement les cartes à microprocesseur, sont utilisables dans un nombre de plus en plus grand d'applications. Au début, le système d'exploitation des cartes, c'est à dire le programme situé en mémoire ROM, ne pouvait gérer qu'une seule application. Le système d'exploitation est inscrit au moment de la fabrication du micro-circuit. En augmentant la taille de la mémoire programme (ROM) et de la mémoire programmable non volatile (EPROM et EEPROM, de nos jours FeRAM), le système d'exploitation peut exécuter davantage de fonctions. Mais le nombre de ces fonctions est toujours limité par la taille de la mémoire ROM. De plus, le rajout d'une fonction supplémentaire dans la ROM implique de réaliser un nouveau masque ; cette réalisation coûte très cher et n'est véritablement rentabilisée que si une grande quantité de cartes sont concernées.

Un moyen d'augmenter le nombre de ces fonctions sans toucher à la mémoire ROM consiste à écrire dans la mémoire programmable, du programme exécutable ainsi que des données permettant de le faire fonctionner. Il est ainsi possible de rajouter des fonctions supplémentaires à un système d'exploitation qui ne possède au départ qu'un nombre figé de fonctions. La demande de brevet FR-A-2.748.134 décrit un moyen de charger du programme dans la mémoire programmable. Mais la mémoire programmable est d'une taille limitée : une fois remplie avec un programme, il n'est plus possible de rajouter de fonctions. De plus, le stockage de ce programme s'effectue au détriment de la place mémoire destinée aux données dans la mémoire programmable. Le précédent procédé s'utilise pour corriger certaines imperfections du programme situé en ROM ou pour rajouter quelques autres fonctions. Si une carte doit exécuter un programme d'une taille très importante, le procédé décrit dans ce document peut s'avérer insuffisant.

Il est connu par le document EP 0 811 911, un système informatique agencé pour compresser un programme de façon à créer plus d'espace dans une mémoire et, si cela ne permet pas de créer assez d'espace, d'enlever le programme de la mémoire. L'inconvénient de ce système est que le programme ne peut pas être exécuté quand il est sous une forme compressée et a fortiori quand il est enlevé.

La présente invention a pour objet de résoudre ce problème en proposant une méthode de chargement et déchargement de la mémoire programmable en fonction des besoins en ce qui concerne les programmes et/ou les données applicatives, pour un dispositif de traitement de l'information constitué par une carte. Ainsi, il devient possible à celle-ci d'exécuter des applications très diverses telles que : Porte-Monnaie Electronique, application bancaire, téléphonie GSM ou application santé actuellement expérimentée en FRANCE. A l'aide de la présente invention, les applications qui viennent d'être énumérées sont virtuellement dans la carte. Le propriétaire de la carte les a chargées au préalable ; ainsi, la carte est configurée selon ses propres besoins.

La présente invention permet aussi de résoudre un autre problème. Un utilisateur peut avoir besoin d'ouvrir en même temps deux fois une même application. L'exécution de cette application dans un dispositif de traitement de l'information tel qu'une carte dure un certain temps. Pour accélérer le traitement, il est avantageux de pouvoir commencer une seconde exécution d'application avant la fin de la première. Ainsi, le même programme se déroule deux fois en même temps.

Le but est atteint par le fait que la carte est dotée d'un système d'exploitation comprenant au moins trois fonctions :
- Chargement d'informations applicatives.
- Déchargement d'informations applicatives.
- Exécution d'informations applicatives.

Pour acquérir une nouvelle application, la carte reçoit des informations applicatives dans sa mémoire programmable et contrôle ces informations.

Lors d'une commande reçue d'un lecteur coopérant avec la carte en vue d'exécuter une application, le système d'exploitation de la carte analyse le contenu de sa mémoire et détermine s'il y a lieu d'appeler le réseau pour décharger une partie de sa mémoire, et/ou de recharger des informations applicatives précédemment déchargées.
Lors du rechargement d'informations applicatives, le système d'exploitation de la carte vérifie que les informations chargées ont été validées par elle dans le passé. Ces informations sont ensuite exécutées.

Le réseau peut être considéré comme une extension de la mémoire programmable de la carte : celle-ci y envoie ce qu'elle ne peut garder dans sa propre mémoire. Elle contrôle, lors du rechargement, que les informations reçues du réseau sont bien celles qu'elle avait préalablement envoyées. La mémoire ROM de la carte doit disposer d'un mécanisme de gestion de la mémoire programmable qui lui permet de charger et d'exécuter un nombre illimité d'application. Dès lors, les tailles des mémoires ROM et programmables de la carte ne sont plus une limitation au nombre d'applications exécutables, et il n'y a plus besoin d'effectuer un nouveau masquage lors du rajout d'applications.
En résumé, l'invention concerne une carte à puce comprenant des moyens de traitement de l'information et des moyens de mémorisation de l'information principaux, caractérisée en ce que les moyens de traitement comprennent :
- des moyens pour détecter, au cours du fonctionnement de la carte à puce, que les moyens de mémorisation principaux contiennent une quantité d'informations telle que l'exécution d'une opération n'est pas possible ;
- des moyens pour sélectionner, dans les moyens de mémorisation principaux, un ensemble d'informations à décharger, dont le déchargement peut libérer dans les moyens de mémorisation principaux un espace suffisant pour autoriser l'exécution de ladite opération ;
- des moyens pour décharger l'ensemble d'informations à décharger dans des moyens de mémorisation secondaires, dans le cas où lesdits moyens de mémorisation secondaires ne contiennent pas ledit ensemble d'informations à décharger.

L'invention concerne aussi le procédé associé. Elle concerne enfin un protocole de communication entre une carte à puce et un lecteur de carte à puce, la carte comprenant des moyens de traitement de l'information et des moyens de mémorisation de l'information principaux, caractérisé en ce qu'il comprend les étapes consistant en ce que :
- le lecteur transmet à la carte un ordre d'exécution d'une opération ;
- la carte recherche si, pour exécuter cette opération, elle dispose d'une place suffisante dans les moyens de mémorisation principaux ;
- dans l'affirmative, la carte exécute ladite opération puis transmet un compte-rendu d'exécution au lecteur ;
- dans la négative, la carte sélectionne dans les moyens de mémorisation principaux un ensemble d'informations à décharger dont le déchargement peut libérer dans les moyens de mémorisation principaux un espace suffisant pour autoriser l'exécution de ladite opération, puis la carte décharge l'ensemble d'informations à décharger dans des moyens de mémorisation secondaires en transmettant un ordre de déchargement au lecteur, dans le cas où lesdits moyens de mémorisation secondaires ne contiennent pas ledit ensemble d'informations à décharger, puis elle exécute ladite opération puis transmet enfin un compte-rendu d'exécution au lecteur.

D'autres détails et avantages de la présente invention apparaîtront au cours de la description suivante de quelques modes d'exécution préférés mais non limitatifs, en regard des dessins annexés sur lesquels :
La figure 1 représente un réseau de traitement de données utilisé par l'invention ;
La figure 2 représente un dispositif de traitement de l'information, utilisé dans la figure 1 et coopérant avec une carte à puce ;
La figure 3 représente une variante de la figure 2, dans laquelle le dispositif de traitement de l'information intègre les fonctionnalités de la carte à puce;
La figure 4 est une variante de la figure 2, où le dispositif de traitement de l'information est équipé d'un dispositif de lecture d'une piste optique ; et
La figure 5 représente une variante de la figure 3.

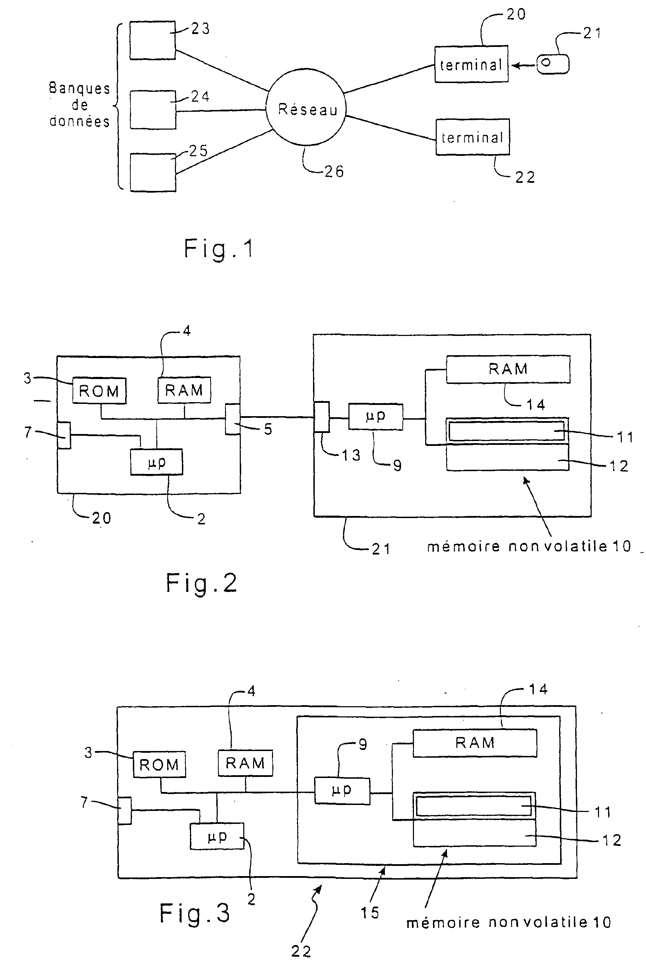

Sur la figure 1, un terminal 20, apte à lire une carte à puce , ou un terminal 22 intégrant des fonctionnalités de carte à puce coopèrent avec des banques de données 23 à 25 distantes et reliées à ceux-ci par un réseau de communication de données 26. Le réseau de communication de données 26 est notamment un réseau téléphonique, le réseau Internet, ou tout autre réseau de communication de données. Chaque banque de données comprend une unité centrale de traitement de données gérant une mémoire. Selon l'invention, et comme précisé ci-après, la carte 21 ou le terminal 22 peuvent, lorsqu'ils détectent que le chargement d'une nouvelle application dans ceux-ci n'est pas possible en raison d'un manque de place mémoire , décider de décharger vers une des banques de données 23 à 25 une autre application. Ce déchargement libère un espace mémoire suffisant pour accueillir la nouvelle application. Si la carte 21 ou le terminal 22 ont ultérieurement besoin de l'application déchargée, ils enverront une commande à la banque de données correspondante pour recharger l'application , après avoir, le cas échéant libéré à nouveau de la place mémoire par un déchargement d'application.

La constitution du terminal 20 et de la carte 21 est précisée sur la figure 2. Le terminal comprend de façon connue en soi un microprocesseur 2 auquel sont reliés une mémoire ROM 3, et une mémoire RAM 4, des moyens 5 pour coopérer, avec ou sans contact physique, avec la carte à puce 21, et une interface de transmission 7 permettant au terminal de communiquer avec le réseau de communication de données 26 de la figure 1. Le terminal 20 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 2.

Le terminal peut être constitué par tout appareil informatique installé sur un site privé ou public et apte à fournir des moyens de gestion de l'information ou de délivrance de divers biens ou services, cet appareil étant installé à demeure ou portable. Il peut notamment s'agir aussi d'un appareil dédié aux télécommunications.

Par ailleurs, la carte 21 porte une puce incluant des moyens de traitement de l'information 9, une mémoire non volatile 10, une mémoire volatile de travail RAM 14, et des moyens 13 pour coopérer avec le terminal 20. Cette puce est agencée pour définir, dans la mémoire 10, une zone secrète 11 dans laquelle des informations une fois enregistrées, sont inaccessibles depuis l'extérieur de la puce mais seulement accessibles aux moyens de traitement 9, et une zone accessible 12 qui est rendue accessible depuis l'extérieur de la puce par le microprocesseur 9 pour une lecture et/ou une écriture d'informations. Chaque zone de la mémoire non volatile 10 peut comprendre une partie non modifiable ROM et une partie modifiable EPROM, EEPROM, ou constituée de mémoire RAM du type "flash" ou FRAM (cette dernière étant une mémoire RAM ferromagnétique), c'est-à-dire présentant les caractéristiques d'une mémoire EEPROM avec en outre des temps d'accès identiques à ceux d'une RAM classique.

En tant que puce, on pourra notamment utiliser un microprocesseur autoprogrammable à mémoire non volatile, tel que décrit dans le brevet américain n° 4.382.279 au nom de la Demanderesse. Comme indiqué en colonne 1, lignes 13-25 de ce brevet, le caractère autoprogrammable de la puce correspond à la possibilité pour un programme fi situé dans une mémoire ROM, de modifier un autre programme fj situé dans une mémoire programmable en un programme gj. Dans une variante, le microprocesseur de la puce est remplacé - ou tout du moins complété - par des circuits logiques implantés dans une puce à semiconducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »). A titre d'exemple d'ASIC, on peut citer le composant de la société SIEMENS commercialisé sous la référence SLE 4436 et celui de la société SGS-THOMSON commercialisé sous la référence ST 1335. Avantageusement, la puce sera conçue sous forme monolithique.

Une variante de la figure 2 est illustrée sur la figure 3, où le terminal 22 de la figure 1 comprend, outre les éléments du terminal 20, ceux de la carte 21 disposés dans un module 15, les éléments communs aux deux figures 2,3 portant les mêmes références. Toutefois, les moyens de coopération 5,13 de la figure 2 sont remplacés par une liaison permanente entre le microprocesseur 2 et le microprocesseur 9.

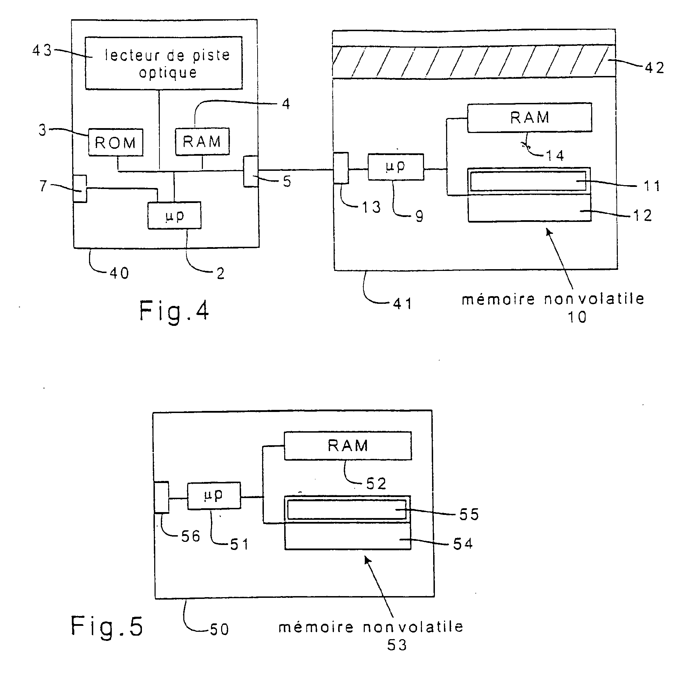

Une variante de la figure 3 est représentée sur la figure 5. Ici, le terminal 50 ne comprend qu'un seul microprocesseur 51 ou équivalent, relié à une mémoire RAM 52 et à une mémoire non volatile 53. La mémoire non volatile 53 comprend une zone 54 rendue accessible de l'extérieur du terminal par le microprocesseur 51, et une zone secrète 55 accessible seulement au microprocesseur 51. Le microprocesseur 51 possède la caractéristique autoprogrammable du microprocesseur 9, décrite en relation avec la figure 2. Enfin, le terminal 50 possède une interface de transmission 56 lui permettant de communiquer avec le réseau de communication de données 26 de la figure 1.

La description qui suit fera référence, de façon non limitative, à la forme de réalisation de la figure 2 et le terminal 20 sera dénommé « lecteur » en raison de sa fonction lecteur de la carte 21.

Les mémoires de la carte sont organisées de la façon suivante: une mémoire de type ROM, une mémoire de travail de type RAM, et une mémoire programmable non volatile de type EEPROM ou FLASH. Comme représenté sur le tableau 1, la mémoire ROM contient une zone de système d'exploitation de base comprenant au minimum des sous-programmes ou routines telles que celles d'entrée/sortie et d'écriture/lecture en mémoire et une zone de système d'exploitation d'une mémoire virtuelle, cette mémoire virtuelle étant constituée par la mémoire des banques de données 23 à 25. Le système d'exploitation de base et le système d'exploitation de la mémoire virtuelle forment ensemble ce que l'on appellera par la suite le « système d'exploitation de la carte ».

Le système d'exploitation de la mémoire virtuelle est capable de gérer de préférence au moins neuf commandes. Quatre commandes au moins sont lancées par le lecteur vers la carte:
- Chargement d'applications en carte.
- Exécution en carte des applications précédemment chargées.
- Effacement d'applications en carte.
- Contrôle de présence d'applications en carte.

Cinq autres commandes sont lancées par la carte vers le lecteur :
- Déchargement d'applications vers le réseau.
- Rechargement d'applications depuis le réseau.
- Suspension du processus de chargement.
- Reprise du processus de chargement.
- Effacement d'applications dans le réseau.

Dans une réalisation particulière, le système d'exploitation de la mémoire virtuelle filtre et transmet au programme de l'application chargé en mémoire programmable, tous les ordres reçus de l'extérieur qui doivent être traités par ce programme.

Dans le présent texte, le terme « information » désigne tout programme exécutable ou donnée non exécutable en général. Le terme « application » désigne un programme particulier, destiné à mettre en oeuvre une application d'un fournisseur de services ou de produits, et des données d'application associées..

Toujours selon le tableau 1, la mémoire programmable comporte au minimum trois zones :
- une première zone dite "des données de système "contenant un code "C" identifiant la carte ;
- une seconde zone dite « de données de gestion » contenant des données de gestion des applications , à savoir une clé de signature dite " SWAP " particulière à chaque carte, une ou plusieurs clés de chiffrement liées selon le cas à des fournisseurs d'applications ou à des applications particulières, et un tableau appelé "TAB_APPLI", et
- une troisième zone dite « de chargement », utilisée pour recevoir les informations d'applications, c'est-à-dire du programme exécutable et/ou des données nécessaires au fonctionnement de ce programme.

Au départ, la carte peut être donnée à son porteur avec une zone de chargement et un tableau TAB_APPLI vides. Au moins la clé SWAP est située dans la zone secrète 11 de la mémoire non volatile 10 de la carte.

**Tableau 1**

| |
|---|
| Zone de chargement des informations d'applications |
| Zone des données de gestion (SWAP, TAB_APPLI, ..) |
| Zone des données de système (code C, .... ) |
| Zone du système d'exploitation de la mémoire virtuelle (ROM) |
| Zone du système d'exploitation de base (ROM) |

Le tableau TAB_APPLI contient les informations correspondant aux applications disponibles dans la carte, soit que ces applications sont physiquement contenues en carte , soit qu'elles sont virtuellement contenues en carte car déchargées vers le réseau. Il a la structure suivante :

**Tableau 2 : TAB_APPLI**

| Code de l'application | Adresse de stockage | nombre d'octets | Signature des informations | Chargement/ Déchargement |
|---|---|---|---|---|
| I | ADR-I | I | SGN-I | Chargé |
| J | ADR-J | m | SGN-J | Déchargé |
| K | ADR-K | n | SGN-K | Chargé |

Le tableau TAB_APPLI 2 comprend autant de lignes que d'applications rendues disponibles par la carte et, pour chaque ligne, cinq colonnes. Une première colonne définit un code d'identification I,J,K de l'application. Une deuxième colonne définit une adresse de stockage ADR-I,ADR-J,ADR-K à partir de laquelle l'application est stockée en carte. Une troisième colonne définit un nombre d'octets représentant la quantité d'informations de l'application. Une quatrième colonne définit une signature portant sur l'ensemble des octets de l'application , calculée en utilisant un algorithme et la clé SWAP de la carte en tant que clé secrète. En tant qu'algorithme , on peut utiliser un algorithme symétrique tel que le D.E.S. (de l'anglais Data Encryption Standard) ou asymétrique tel que le R.S.A. (des auteurs Rivest, Shamir et Adleman) ; avantageusement cependant, il suffira d'utiliser une fonction plus simple, telle qu'une fonction de hachage comme MD5 ou SHA, ou une fonction telle que le « ou exclusif », puisque, dans le cadre de l'invention , la signature ne sort pas de la carte et se trouve donc préservée. Enfin, une cinquième colonne définit si l'application concernée est dans un état « chargé » en carte ou « déchargé » dans une banque de données.

Dans un premier temps, un porteur de carte ou un fournisseur d'applications désire charger en carte une première application ayant un code d'identification " K". L'exécution d'une commande de chargement peut être conditionnée par une authentification de porteur ou de fournisseur d'applications menée à bien. Le mécanisme d'authentification bien connu en soi consiste, pour le porteur ou le fournisseur d'applications, à fournir à la carte une information lui permettant de s'assurer qu'elle dialogue avec un interlocuteur habilité.
La commande de chargement contient un ordre de chargement, le code C de la carte, le code K de l'application et le nombre d'octets n d'informations correspondant à cette application, ce qui donne le format de commande suivant :

| | | | |
|---|---|---|---|
| Ordre de Chargement | Carte C | Appli K | nombre n |

Une fois la commande reçue par la carte, le système d'exploitation de la carte vérifie que le code C envoyé est bien le même que celui enregistré dans la zone des données de système. Dans la négative, la carte renvoie au réseau un message d'erreur. Dans l'affirmative, les informations de l'application sont donc bien destinées à cette carte : le système d'exploitation de la carte lit alors le tableau TAB_APPLI dans la zone des données de gestion pour déterminer s'il s'agit d'un chargement initial ou non. Au départ, TAB_APPLI ne contient pas d'informations sur l'application K ; si ce n'est pas le cas, la carte répond au lecteur par le message « application déjà chargée » ; si c'est le cas, il s'agit donc d'un chargement initial. Le système d'exploitation de la carte détermine si les n octets peuvent être logés dans sa mémoire : dans l'affirmative, elle calcule l'adresse de début " ADR-K " d'un premier bloc de n octets disponibles dans la zone de chargement. Dans la négative, elle renvoie le message « mémoire insuffisante ». Enfin, la carte indique au lecteur qu'il peut envoyer les n octets de l'application, à l'aide de la réponse " OK_Chargement ". Le lecteur envoie alors les n octets de l'application.

Une fois les informations de l'application stockées en mémoire programmable, le système d'exploitation de la carte calcule la signature « SGN-K » de ces informations. Il rentre alors dans le tableau TAB_APPLI le code d'application K, l'adresse de stockage ADR-K, le nombre d'octets n, et la signature SGN-K. Une fois cette opération effectuée, l'indicateur " Chargement/Déchargement " est positionné sur " Chargé ". La mise à jour du tableau TAB_APPLI étant terminée, le système d'exploitation de la carte peut alors envoyer un compte-rendu, à travers le lecteur, au porteur de carte ou au fournisseur d'applications, indiquant que le chargement de l'application a été correctement effectué. Le tableau TAB_APPLI possède alors la structure suivante :

**Tableau 3 : TAB_APPLI**

| Code de l'application | Adresse de stockage | Nombre d'octets | Signature des informations | Chargement/ Déchargement |
|---|---|---|---|---|
| K | ADR-K | n | SGN-K | Chargé |

Selon une première variante, le système d'exploitation de la carte peut lancer, juste après le chargement, le programme exécutable contenu dans les informations applicatives, c'est-à-dire dans les informations de l'application. Ceci permet d'initialiser les informations applicatives. Par exemple, dans le cas d'une application Porte-Monnaie Electronique, la première exécution du programme permet d'initialiser à 0 Frs le solde du porte-monnaie écrit dans la mémoire. Selon une seconde variante, le programme exécutable est lancé lors d'une première commande envoyée par le lecteur à la carte et faisant appel à l'application considérée. De façon simple, l'adresse de début d'exécution de l'application est « ADR-K », mais on peut utiliser un adressage indirect : l'adresse désignée est alors, de façon connue en soi dans le domaine des microprocesseurs, le contenu de la mémoire noté [ADR-K] qui contient l'adresse d'exécution.

Le lecteur envoie à la carte des commandes en spécifiant le type d'application ; par exemple, ce type peut être codé dans le premier des cinq octets d'une commande selon la norme ISO 7816-3 ; cet octet est appelé dans la dite norme : « CLA ». Le système d'exploitation de la mémoire virtuelle de la carte contrôle les commandes que lui envoie le lecteur et détermine le code de l'application correspondant à la commande. Puis, il lit dans le tableau TAB_APPLI si le code est écrit ; si c'est le cas, la carte peut exécuter l'application K. Si ce n'est pas le cas, la carte ne peut exécuter l'application K : elle répond en envoyant un message d'erreur. Si le code K est écrit dans TAB_APPLI, la valeur de l'indicateur « Chargement/Déchargement » est ensuite testée. S'il est positionné sur « Chargement », les informations applicatives sont bien présentes en mémoire programmable de la carte. Dans ce cas, le système d'exploitation de la carte donne la main à un programme de l'application situé à l'adresse ADR-K ou [ADR-K]. Nous allons voir par la suite ce qui se passe lorsque la mémoire programmable de la carte ne contient pas les informations applicatives, parce qu'elles ont déjà été déchargées.

Supposons maintenant que le porteur de carte ou le fournisseur d'applications désire que sa carte contienne les informations d'une seconde application, notée « J » par exemple. Cela est possible en chargeant les informations applicatives « J » dans la mémoire programmable de la carte. De même que précédemment, le porteur de carte ou le fournisseur d'applications s'authentifie en présentant un secret suivi de la commande de chargement d'informations applicatives suivante :

| | | | |
|---|---|---|---|
| Ordre de chargement | Carte C | Appli J | nombre m |

Elle se présente comme la précédente relative au chargement de l'application K ; ici, le nombre d'octets de l'application est m.

Le système d'exploitation de la carte vérifie le code C et recherche le premier bloc de m octets disponible dans la mémoire programmable. Supposons que la mémoire programmable ne peut physiquement contenir en même temps les deux blocs d'informations applicatives constitués par l'application K et l'application J, mais qu'elle peut contenir l'application J si elle décharge tout ou partie de l'application K. La carte informe le lecteur qu'elle suspend le processus de chargement de l'application J à l'aide d'une commande spécifique envoyée au lecteur, et décide alors de décharger l'application K dans une banque de données qui peut être considérée comme la mémoire virtuelle de la carte. Ce déchargement va libérer de la place mémoire pour charger l'application J.

Le déchargement consiste alors à transférer dans l'une des banques de données 23 à 25 du réseau destinée notamment à la carte actuelle, les informations applicatives particulières à cette carte. Par le calcul de signature effectué lors du chargement, la carte est assurée de pouvoir contrôler l'intégrité et l'authenticité de ses propres informations lors d'un rechargement ultérieur. De plus, le fait d'avoir déjà effectué le calcul de signature lors du chargement initial optimise le temps d'exécution de la commande de déchargement. La carte envoie au lecteur la commande suivante :

| | | | | |
|---|---|---|---|---|
| Ordre de déchargement vers le réseau | Carte C | Appli K | nombre n | n octets d'informations |

Cette commande comporte, comme la commande de chargement, le code C de la carte, celui K de l'application à décharger ,et le nombre d'octets n d'informations de l'application ; elle comporte en plus le contenu même de ces n octets d'informations, transmis au lecteur en même temps que l'ordre de déchargement. Dans le cas où le déchargement de l'application intervient alors qu'une partie de celle-ci a déjà été exécutée, des informations de contexte, permettant de reprendre ultérieurement l'exécution de l'application à l'endroit où elle a été interrompue, sont, soit stockées dans la mémoire programmable de la carte , soit ajoutées aux n octets d'informations de l'application et déchargées en même temps qu'eux dans le réseau.

Il est possible d'indiquer un identifiant de destinataire sous la forme d'une adresse de réseau. Avantageusement, le réseau possède une table de correspondance qui associe chaque carte à l'adresse de la banque de donnée qui lui est notamment destinée. Ceci permet d'éviter à la carte d'avoir à stocker ladite adresse ou ledit identifiant, et de rassembler dans une même banque de données toutes les informations déchargées à partir d'une même carte.

Le lecteur reçoit la commande, mais reconnaît qu'elle est destinée au réseau : il la renvoie donc vers la banque de données à laquelle elle est adressée. Si le réseau possède plusieurs banques de données, le choix peut s'effectuer en fonction du code C de la carte. La banque de donnée reçoit les n octets d'informations applicatives et renvoie à la carte, via le lecteur, un accusé de bonne réception indiquant que le stockage s'est bien passé. La carte modifie alors le tableau TAB_APPLI en positionnant l'indicateur Chargement/Déchargement sur " Déchargé ". La place mémoire occupée jusque-là par les informations applicatives de l'application K devient disponible. L'opération de chargement de l'application J peut alors reprendre et la carte envoie au lecteur une commande de reprise du processus de chargement ; l'opération de chargement s'effectue de façon identique à celle de K. Le système d'exploitation de la carte détermine l'adresse de stockage ADR-J des m octets de l'application J et indique au lecteur par un message « OK_Chargement » qu'il peut envoyer les m octets d'informations applicatives.

Le lecteur envoie les m octets d'informations applicatives qui sont écrits à partir de l'adresse " ADR-J ". Une fois les informations de l'application J stockées en mémoire programmable, le système d'exploitation de la carte calcule une signature de celles-ci en effectuant un calcul cryptographique à l'aide de la clé SWAP. Enfin, le système d'exploitation met à jour le tableau TAB_APPLI en écrivant le code J, les valeurs ADR-J, m et SGN-J, et met à jour l'indicateur " Chargement/Déchargement " en le positionnant sur " Chargé ". Le système d'exploitation peut alors envoyer au lecteur un compte-rendu indiquant que le chargement a été correctement effectué.

Le tableau TAB_APPLI possède alors les valeurs suivantes:

**tableau 4 : TAB_APPLI**

| Code de l'application | Adresse stockage | nombre d'octets | Signature des données | Chargement/ Déchargement |
|---|---|---|---|---|
| K | ADR-K | n | SGN-K | Déchargé |
| J | ADR-J | m | SGN-J | Chargé |

Une fois terminée la mise à jour du tableau TAB_APPLI, le système d'exploitation de la carte peut alors lancer l'application J de la même façon qu'il a lancé l'application K et la carte exécute la commande d'exécution que le lecteur lui avait envoyée.
Si le porteur de carte ou le fournisseur d'applications connecte sa carte à un lecteur et désire exécuter une nouvelle fois l'application K, le système d'exploitation de la carte analyse le contenu du tableau TAB_APPLI pour déterminer si cette application est accessible avec cette carte. Dans le cas présent, l'application K est bien enregistrée dans TAB_APPLI, mais elle a été déchargée dans le réseau. Une autre application est en mémoire, c'est J et elle occupe m octets. Le système d'exploitation teste alors si l'application K qui occupe n octets en mémoire peut être chargée dans ce qui reste disponible en mémoire. Comme on l'a supposé précédemment, la réponse à ce test est négative. Le système d'exploitation décide alors de décharger l'application J actuelle pour pouvoir recharger l'application K.

La commande, émise par la carte, de déchargement vers le réseau de J est :

| | | | | |
|---|---|---|---|---|
| Ordre de déchargement vers le réseau | Carte C | Appli J | nombre m | m octets d'informations |

L'opération une fois effectuée, l'indicateur de chargement de l'application J dans TAB_APPLI est mis en position « Déchargé ». La place mémoire étant maintenant disponible, le système d'exploitation envoie au lecteur une commande de rechargement de l'application K depuis le réseau. Cette commande a le format suivant :

| | | | |
|---|---|---|---|
| Ordre de rechargement à partir du réseau | Carte C | Appli K | nombre n |

Le lecteur reçoit la commande et la renvoie vers la banque de donnée associée à la carte C. La banque de donnée qui possède les informations de la carte C reçoit la commande et recherche dans le fichier de cette carte, les n octets d'informations applicatives relatives à l'application K. La banque de données élabore le message suivant, qui est la réponse à la dernière commande de la carte. Cette réponse est transmise à la carte via le lecteur:

| | | | |
|---|---|---|---|
| Carte C | Appli K | nombre n | n octets de données |

Le système d'exploitation de la carte peut vérifier que les codes C, K et la valeur n reçus, sont bien identiques à ceux de la commande de déchargement émise précédemment. Si l'identité est réalisée, la commande se poursuit par la réception des n octets de données qui sont écrits à partir de l'adresse ADR-K dans la zone de chargement, cette adresse étant à cet effet lue par le système d'exploitation dans le tableau TAB_APPLI ou récupérée à partir des informations de contexte rechargées. Dans le même temps, le système d'exploitation calcule la signature des n octets écrits par un calcul cryptographique utilisant la valeur de la clé SWAP. La signature recalculée est alors comparée à la valeur écrite dans le tableau TAB_APPLI. Si les données reçues du réseau ne sont pas identiques à celles déchargées précédemment, les deux valeurs de signature ne seront pas égales. Il existe alors un doute sur l'authenticité ou l'intégrité des informations reçues. Les informations chargées ne peuvent donc pas être exécutées. La carte renvoie au lecteur un message d'erreur indiquant une réception d'informations erronées au cours de la dernière opération de chargement, et l'impossibilité d'exécuter l'application K ; le système d'exploitation ne met pas l'indicateur de chargement en position « chargé » ; le cas échéant, il peut effacer le contenu de l'application K.

Si en revanche les deux valeurs de signature sont égales, les informations reçues correspondent bien à celles de l'application K précédemment chargée dans la carte. Une fois ces contrôles effectués, le système d'exploitation de la carte met à jour le tableau TAB_APPLI en mettant l'indicateur de chargement de l'application K sur la position « Chargé ».

Le tableau TAB_APPLI a alors les valeurs suivantes :

**Tableau 5 : TAB_APPLI**

| Code de l'application | Adresse de stockage | nombre d'octets | Signature des données | Chargement/ Déchargement |
|---|---|---|---|---|
| K | ADR-K | n | SGN-K | Chargé |
| J | ADR-J | m | SGN-J | Déchargé |

Une fois terminée la mise à jour du tableau TAB_APPLI, le système d'exploitation lance l'application K comme précédemment, et la carte peut exécuter la dernière commande de type applicative envoyée par le lecteur.

On a décrit précédemment que, lors de la réception par la carte d'une commande de chargement d'une application non actuellement stockée, le système d'exploitation de la carte teste la place disponible en mémoire. Si celle-ci est suffisante, le chargement peut s'opérer sans décharger l'application actuellement en mémoire. Il existe alors deux applications dans la carte. Le tableau TAB_APPLI prend alors la configuration suivante :

**Tableau 6 : TAB_APPLI**

| Code de l'application | Adresse de stockage | nombre d'octets | Signature des données | Chargement/ Déchargement |
|---|---|---|---|---|
| K | ADR-K | n | SGN-K | Chargé |
| I | ADR-I | I | SGN-I | Chargé |
| J | ADR-J | m | SGN-J | Déchargé |

Dans cet exemple, deux applications I et K co-habitent dans la carte : elles sont directement exécutables. Une troisième application J est accessible à l'aide de cette carte, mais il faut la recharger à partir du réseau. Les mémoires non volatiles de la carte contiennent les informations suivantes :

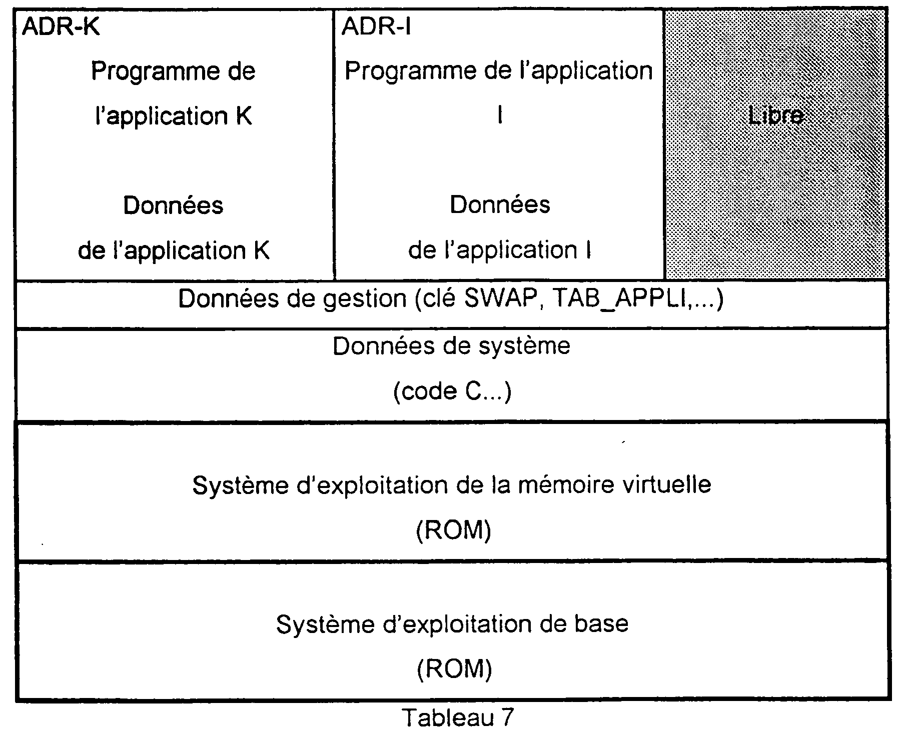

Ce tableau correspond au tableau 1 précité, dans lequel la zone de chargement est détaillée comme suit : on voit que la zone de chargement des informations applicatives comprend trois sous-zones : une zone recevant les informations de l'application K, une zone recevant les informations de l'application I, et une zone résiduelle libre qui est de taille inférieure à m.

A la lumière de cet exemple, on comprend mieux les caractéristiques de l'invention. La carte est dotée d'un système d'exploitation minimum permettant de gérer la place mémoire, de charger ou décharger des applications, de signer les informations applicatives à décharger vers le réseau, de vérifier les informations applicatives déchargées et reçues du réseau en comparant les signatures, et de lancer des applications chargées dans la mémoire. La signature permet de vérifier que les informations applicatives stockées dans la banque de données ont bien été préalablement chargées dans cette carte. Le lecteur est doté d'un programme qui reconnaît les commandes de déchargement et rechargement de la carte et de moyens pour transmettre les dites commandes au réseau. Enfin, le réseau est équipé de banques de données, la mémoire de ces banques pouvant être considérée comme une extension de la mémoire programmable de la carte.

Comme on l'a vu en préambule, l'inscription de routines dans la mémoire programmable pour modifier le fonctionnement du programme en ROM ne peut être réalisée que par des personnes connaissant ce programme. Les sauts vers ces routines et leurs retours dans le programme en ROM nécessitent de connaître précisément les adresses, les paramètres d'entrée et de sortie de ces routines, l'utilisation de la mémoire de travail, ..etc. La présente invention résout ce problème en évitant d'utiliser ces routines et, par voie de conséquence, de divulguer les spécifications de ces routines, tout en autorisant l'exécution de nombreuses applications. Les programmes applicatifs s'exécutent en faisant le moins possible appel au programme en ROM. Le concepteur de ce programme peut indiquer les points d'entrée à certaines routines dites élémentaires : réception d'octets, émission d'octets, écriture de n octets en mémoire programmable, calcul cryptographique ...etc.

Une première amélioration de l'invention consiste à chiffrer les informations applicatives pour les protéger lors de leurs différents transferts entre le dispositif de traitement de l'information destiné à accueillir des applications (tel que la carte 21 ou le terminal 22 de la figure 1) et le réseau, et lors de leur stockage en dehors de la carte 21 ou du terminal 22.

Un premier chiffrement d'application concerne le chargement initial de l'application par un fournisseur d'applications et utilise une clé de base secrète, détenue par le dispositif de traitement de l'information et le fournisseur d'applications situé dans le réseau ; dans le cas où le dispositif de traitement de l'information est une carte, son lecteur ignore la clé de base. Avantageusement, chaque application est chiffrée avec une clé diversifiée propre, obtenue à partir de la clé de base et d'un diversifiant constitué par un paramètre spécifique de l'application , par exemple son code K ou son adresse de stockage ADR-K dans la mémoire programmable. Ce diversifiant peut être stocké dans le tableau TAB_APPLI de sorte que le système d'exploitation peut facilement le retrouver lors des commandes de chargement / déchargement.

Lors du chargement initial de l'application par le fournisseur d'applications dans le dispositif de traitement de l'information 21 ou 22, ce fournisseur calcule la clé diversifiée associée à cette application et chiffre l'application au moyen de celle-ci avant de l'envoyer dans le réseau ; à réception, le dispositif de traitement de l'information calcule la clé diversifiée associée à cette application et la déchiffre avec celle-ci, avant de la stocker dans la zone de chargement de la mémoire programmable.

Un second chiffrement de l'application concerne les déchargements et rechargements effectués par le dispositif de traitement de l'information 21, 22. Lors d'un déchargement de l'application par le dispositif de traitement de l'information 21,22 vers une banque de données, l'application est à nouveau chiffrée par ce dispositif. La clé de chiffrement utilisée n'a pas à être partagée par le dispositif de traitement de l'information avec tout autre interlocuteur tel que le fournisseur d'applications : n'importe quelle clé générée par le dispositif de traitement de l'information conviendra, puisque c'est ce même dispositif, et lui seul, qui effectuera le déchiffrement ultérieur.

Avantageusement, la carte peut utiliser le procédé décrit par le document US-A-4,907,270 qui a pour objet de fournir un procédé pour s'assurer de l'authenticité et de l'intégrité d'un message chiffré.
Le chiffrement décrit ci-dessus permet d'éviter que des informations applicatives puissent être découvertes par un fraudeur, et empêche la copie frauduleuse des programmes applicatifs.

En plus des commandes décrites précédemment, il est possible de prévoir deux commandes supplémentaires : une commande d'effacement d'applications, et une commande de contrôle de présence d'applications en carte.

La commande d'effacement d'applications consiste, pour le porteur de carte ou le fournisseur d'applications, à envoyer à la carte une commande destinée à supprimer les applications qui ne sont plus utilisées; son format est le suivant :

| | | | |
|---|---|---|---|
| Ordre d'effacement d'applications | Carte C | Appli K | nombre n |

Elle comprend un ordre d'effacement d'applications, le code C de la carte concernée, le code K de l'application, et éventuellement le nombre n d'octets d'informations de l'application. Si l'application concernée est chargée en carte , le système d'exploitation de la carte rend disponible l'espace mémoire réservé jusque-là à l'application K. Si en revanche l'application K était déchargée dans une banque de données, la carte envoie vers celle-ci un ordre d'effacement qui a le même format que celui ci-dessus. Enfin, une fois que l'ordre d'effacement a été exécuté, le système d'exploitation efface la ligne du tableau TAB_APPLI concernant cette application.

La commande de contrôle de présence d'applications en carte peut prendre deux formes différentes. La première forme de la commande permet au porteur de carte ou au fournisseur d'applications de demander à la carte si elle possède une application particulière ; son format est le suivant :

| | | | |
|---|---|---|---|
| Ordre de contrôle de présence d'applications | Carte C | Appli K | nombre n |

Elle comprend un ordre de contrôle de présence d'applications, le code C de la carte concernée, le code K de l'application, et éventuellement le nombre n d'octets d'informations de l'application.

La seconde forme de la commande permet au porteur de carte ou au fournisseur d'applications de demander à la carte l'ensemble des lignes de son tableau TAB_APPLI , à l'exclusion bien évidemment des signatures et éventuellement du nombre n d'octets et de l'indicateur de chargement. Le format de la commande est le suivant :

| | |
|---|---|
| Ordre de contrôle de présence d'applications | Carte C |

Une seconde amélioration de l'invention consiste à ne déclencher le déchargement d'une application vers le réseau que lorsque cela est nécessaire. Si, au moment où il faut libérer de la mémoire, l'application chargée n'a pas été modifiée et si le réseau possède déjà les mêmes informations applicatives de cette application, il n'est pas utile de décharger ces informations. La seconde amélioration a pour objet d'éviter de stocker plusieurs fois les mêmes valeurs d'informations applicatives sur le réseau.

Pour mettre en place cette amélioration il faut modifier le tableau TAB_APPLI, voici la nouvelle structure :

**Tableau 8 : TAB-APPLI**

| Code de l'application | Adresse de stockage | nombre d'octets | Signature des informations | Chargement/ Déchargement | Modification |
|---|---|---|---|---|---|
| K | ADR-K | n | SGN-K | Chargé/ Déchargé | OUI/ NON |

On a ajouté une sixième colonne au tableau, qui contient un indicateur noté " Modification ", pouvant prendre deux valeurs : Oui ou Non. Lors du chargement initial d'une application, l'indicateur est positionné à " Oui " : cette valeur indique qu'il faut décharger les informations applicatives vers le réseau pour libérer la place mémoire correspondante. Par contre, après une commande de rechargement à partir du réseau, l'indicateur est positionné à " Non " : cette valeur indique que les informations applicatives stockées en mémoire programmable du dispositif de traitement de l'information (carte 21 ou terminal 22 de la figure 1) sont identiques à celles mémorisées dans la banque de données du réseau. Tant que l'indicateur reste à « Non », le système d'exploitation du dispositif de traitement de l'information n'effectue pas de commande de déchargement de l'application ; il positionne uniquement l'indicateur de chargement en position « Déchargé » pour qu'une autre application puisse occuper sa place en mémoire. L'indicateur est positionné à " Oui " lorsque l'on modifie les informations applicatives ; par voie de conséquence, la valeur de signature n'est alors plus exacte : il faudra la recalculer lors du déchargement.

Cette modification peut intervenir dans au moins deux cas. Le premier cas est une mise à jour du programme applicatif, soit pour le rendre plus performant en rajoutant des fonctions supplémentaires, soit pour corriger un défaut. Le second cas arrive fréquemment lorsque, dans la mémoire programmable du dispositif de traitement de l'information 21 ou 22 , des données sont mêlées au programme applicatif. Par exemple, une application porte-monnaie électronique contient à la fois le logiciel pour gérer les débits et les crédits, mais aussi des données dont le solde. A chaque utilisation, cette valeur évolue généralement et donc, l'indicateur " Modification " est presque toujours en position " Oui ".

Ce dernier exemple amène à une troisième amélioration de la présente invention. On voit que dans les informations applicatives, existent à la fois du programme exécutable et des valeurs de données applicatives susceptibles d'évoluer souvent. Les moyens décrits dans la troisième amélioration décrite ci-après permettent de bien séparer les deux types d'informations. Le dispositif de traitement de l'information choisit alors de ne décharger vers le réseau que les informations qu'il a effectivement modifiées.

Pour réaliser cette troisième amélioration, il convient de perfectionner l'organisation des mémoires non volatiles, qui peut se schématiser de la façon suivante :

**tableau 9**

| | | | |
|---|---|---|---|
| Programme de l'application (mémoire programmable) | | | |
| | | Données évolutives séquence 1 | Données évolutives séquence 2 |
| | Données de l'application | | |
| Données de gestion (clé SWAP, TAB_APPLI,...) en mémoire programmable | | | |
| Données de type système en mémoire programmable (code C,......) | | | |
| Système d'exploitation de la mémoire virtuelle (ROM) | | | |
| Système d'exploitation de base (ROM) | | | |

Le tableau 9 diffère du tableau 1 précité par la structure de sa zone de chargement de la mémoire programmable, qui se présente comme suit :
- un bloc relatif à l'application en tant que telle et comprenant deux sous-blocs d'informations :
   - un bloc relatif au programme exécutable de l'application, noté « programme de l'application » ;
   - un bloc relatif aux données (non exécutables) évolutives de l'application, noté « données de l'application » ;
- un certain nombre de blocs de données (non exécutables) évolutives correspondant à des exécutions particulières du programme exécutable : ces exécutions sont appelées par la suite des « séquences ». Par définition, les données d'une séquence sont temporaires, c'est-à-dire qu'elles ne sont utilisées que lors de cette séquence , et pas lors des séquences précédentes ou suivantes. C'est ce qui les distingue des « données de l'application» précitées, lesquelles sont utilisées durant toutes les séquences. Sur le tableau 9, deux blocs de données de séquences sont représentés, notés « données évolutives séquence 1 » et « données évolutives séquence 2 ». Le rôle de ces différents blocs d'informations sera expliqué dans l'exemple qui va suivre.

Pour réaliser cette troisième amélioration, le tableau TAB_APPLI est modifié, il possède la structure suivante :

**tableau 10 : TAB_APPLI**

| Code application/ Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Charge./ Décharge. | adresse de stockage | nombre d'octets | signature | Charge./ Décharge |
| P/1 | ADR-Cod-P | p-cod | SGN-cod-P | Chargé | ADR-Dat-P/1 | p-dat | SGN-dat-P/1 | Chargé |
| P/2 | ADR-Cod-P | p-cod | SGN-cod-P | Chargé | ADR-Dat-P/2 | p-dat | SGN-dat-P/2 | Chargé |
| J/1 | ADR-Cod-J | j-cod | SGN-cod-J | Chargé | ADR-Dat-J/1 | j-dat | SGN-dat-J/1 | Chargé |
| J/2 | ADR-Cod-J | j-cod | SGN-cod-J | Chargé | ADR-Dat-J/2 | j-dat | SGN-dat-J/2 | Déchargé |

Vis-à-vis du tableau TAB_APPLI 2 précité, ce tableau présente les différences suivantes. La première colonne spécifie, outre le code de l'application, le numéro « i » de la séquence concernée. Les informations traitées le sont en deux groupes: celles relatives au programme exécutable et aux données de l'application , et celles relatives aux données évolutives des séquences. Pour chaque groupe d'informations , on retrouve les quatre colonnes suivantes du tableau TAB_APPLI 2 : adresse de stockage , nombre d'octets , signature , indicateur de chargement. Chaque ligne du tableau correspond à une séquence donnée P/1 ou P/2 toutes deux relatives à une application P, ou une séquence J/1 ou J/2 toutes deux relatives à une autre application J. Dans différentes cases du tableau , le code de l'application est mentionné pour rappeler que la valeur considérée est relative à une application donnée; par exemple :
- ADR-Cod-P : adresse de stockage relative à l'application P
- j-cod : nombre d'octets relatif à l'application J

Par ailleurs, le symbole « Cod » indique que la valeur considérée est relative à une information de type « application » (programme ou données du premier groupe), tandis que « Dat » indique que la valeur considérée est relative à une information de type « séquence » (données du second groupe) ; par exemple :
- SGN-cod-P : signature d'informations (programme ou données ) relatives à l'application P
- SGN-dat-J/2 : signature de données relatives à la séquence N°2 de l'application J

Un exemple décrira mieux le problème posé et la façon de le résoudre en utilisant la présente invention.
Le dispositif de traitement de l'information (carte 21 dans ce cas) vient de recevoir une commande de chargement initial de l'application P : application de paiement de type Porte-Monnaie Electronique (PME). Les informations applicatives stockées en mémoire programmable sont le programme exécutable et les données relatives à l'application ; il n'y a pas encore de données évolutives correspondant à une séquence. Ces informations comprennent n-Cod octets stockés à partir d'une adressé ADR-Cod-P. L'indicateur de chargement est positionné à « Chargé ». En plus des informations relatives au programme exécutable et aux données de l'application, les informations transmises lors de la commande contiennent un nombre d'octets de données évolutives « p-dat » relatives à une séquence i. Le tableau TAB_APPLI possède alors les valeurs suivantes :

**tableau 11 : TAB_APPLI**

| Code application Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé. | adresse de stockage | nombre d'octets | signature | Chargé./ Déchargé |
| P/i | ADR-Cod-P | p-cod | SGN-cod-P | Chargé | 0 | p-dat | 0 | 0 |

Les transactions sont validées par un circuit électronique appelé module de sécurité. Ce module peut se situer soit dans le terminal lecteur de carte 20 de la figure 1, soit, si on désire un maximum de sécurité, dans un centre d'agrément bancaire qui peut se situer très loin du terminal 20 . Une transaction de type P.M.E. se déroule en plusieurs étapes qui nécessitent des communications entre la carte, le terminal et le module de sécurité. L'achat peut s'effectuer chez un commerçant doté d'un terminal avec module, mais il peut aussi être fait au domicile du porteur de la carte dont le terminal n'est pas doté d'un module.

La carte est sollicitée pour effectuer un achat par un ordre d'initialisation d'une transaction. Le système d'exploitation de la carte reconnaît un ordre de type applicatif ; il interroge alors son tableau TAB_APPLI. L'interrogation du tableau lui indique que l'application correspondant à l'ordre est bien chargée et qu'aucune séquence n'a été allouée. Le système d'exploitation initialise alors une séquence en lui attribuant un numéro , « 1 » par exemple. Il alloue à cette séquence une place mémoire de « n-dat » octets, à partir de l'adresse ADR-Dat-P/1. L'indicateur de chargement correspondant à cette séquence est positionné sur « Chargé ». Le tableau TAB_APPLI possède alors les valeurs suivantes

**tableau TAB_APPLI 12**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR- Cod-P | n-cod | SGN-cod-P | Chargé | ADR-Dat-P/1 | n-dat | 0 | Chargé |

Puis, le système d'exploitation de la carte lance le programme applicatif en effectuant un saut à l'adresse ADR-Cod-P ; il spécifie l'adresse ADR-Dat-P/1 des données temporaires à utiliser, ce qui permet à l'application de connaître l'endroit où sont mémorisées les données de la séquence. Ces données sont, entre autres, le montant de la transaction, l'objet de la transaction, l'organisme vendeur et la date de la transaction. En revanche, une donnée telle que le solde du porte-monnaie électronique n'est pas une donnée temporaire de séquence, car sa durée de vie dépasse celle d'une séquence ; étant de type applicative, cette donnée est mémorisée avec le programme de l'application.

L'achat d'un premier produit est en cours : la carte envoie alors au lecteur 20 un message en vue d'obtenir une validation de la transaction auprès d'un centre de paiement accessible par le réseau. Cette communication peut durer un certain temps. En effet, les communications peuvent être perturbées et les données envoyées peuvent être longuement analysées par le centre d'agrément bancaire. Tout cela provoque un allongement de la durée globale de la transaction. Pendant ce temps, l'utilisateur décide d'effectuer un second achat. La présente invention va permettre d'éviter d'attendre la fin de la première transaction pour commencer la seconde.

Pour effectuer ce second achat, la carte est sollicitée une seconde fois par un nouvel ordre d'initialisation d'une transaction. De même que précédemment, le système d'exploitation de la carte vérifie que le programme exécutable de l'application PME est chargée en mémoire programmable. Cette vérification s'effectue en interrogeant son tableau TAB_APPLI ; le système d'exploitation reconnaît alors la présence du programme et d'une séquence (1) qui est en cours. Pour cela, il affecte à cette seconde exécution un nouveau numéro de séquence (2) et initialise le tableau TAB_APPLI en rajoutant une nouvelle ligne à celui-ci. Puis, il vérifie s'il existe suffisamment de place pour allouer dans la mémoire programmable n-dat octets pour les informations de types données non exécutables. Si la place est suffisante, une nouvelle adresse ADR-Dat-P/2 est déterminée et la seconde transaction peut être lancée. Le tableau TAB_APPLI possède les valeurs suivantes :

**tableau TAB_APPLI 13**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Décharg é |
| P/1 | ADR-Cod-P | n-cod | SGN-cod-P | Chargé | ADR-Dat-P/1 | n-dat | 0 | Chargé |
| P/2 | ADR-Cod-P | n-cod | SGN-cod-P | Chargé | ADR-Dat-P/2 | n-dat | 0 | Chargé |

Les deux transactions seront alors réalisées en parallèle dans la carte, sans faire appel au réseau. Le lecteur doit indiquer dans les commandes applicatives envoyées à la carte, de quelle transaction il s'agit.

Si la place est insuffisante, le système d'exploitation de la carte décide de décharger uniquement les données évolutives correspondant à la première transaction (numéro de séquence 1). Il calcule alors la signature des dites données de la première séquence « SGN-dat-P/1 », et l'inscrit dans le tableau TAB_APPLI. Les nouvelles données non exécutables pourront ainsi être à la même place que les données déchargées, c'est-à-dire à une adresse commune aux deux séquences et notée ADR-Dat-P. Puis, la carte envoie au lecteur la commande suivante :

| | | | | |
|---|---|---|---|---|
| Ordre de déchargement vers le réseau | Carte C | Appli P - Data -numéro de séquence 1 | nombre n_dat | « n_dat » octets de données |

Cette commande est de structure identique à celle précitée, avec la différence suivante : la troisième case contient un paramètre spécifiant non seulement le code P de l'application , mais aussi le fait qu'il s'agit de données de type séquence (par le terme « Data »), et le numéro 1 de la séquence concernée.

A la suite de cette commande, le tableau TAB_APPLI possède les valeurs suivantes :

**tableau TAB_APPLI 14**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR-Cod-P | n-cod | SGN-cod-P | Chargé | ADR-Dat-P | n-dat | SGN-dat-P1 | Déchargé |
| P/2 | ADR- Cod-P | n-cod | SGN-cod-P | Chargé | ADR-Dat-P | n-dat | 0 | Chargé |

Suite à cette opération, la seconde transaction portant le numéro de séquence 2 peut se poursuivre. Cette nouvelle transaction nécessite aussi une validation de la part du centre de paiement : une demande est donc émise vers le module de sécurité. Supposons que la carte reçoive à ce moment un message de validation de la première transaction. Le système d'exploitation de la carte reconnaît, à l'aide du numéro de séquence, que ce message concerne une autre transaction que celle en cours et, par la lecture du tableau TAB_APPLI, il reconnaît la première transaction. Pour la traiter, il doit donc charger les données non exécutables de la première transaction.

Sachant que la place mémoire est insuffisante pour les deux blocs de données, le système d'exploitation de la carte doit donc décharger les données de la seconde transaction. Il calcule alors la signature des dites données « SGN-dat-P/2 », et l'inscrit dans le tableau TAB_APPLI. Puis, la carte envoie au lecteur la commande suivante :

| | | | | |
|---|---|---|---|---|
| ordre de dechargement vers le reseau | carte c | appli p - data -numero de sequence 2 | nombre n_dat | « n_dat » octets de donnees |

Le tableau TAB_APPLI possède alors les valeurs suivantes :

**tableau TAB_APPLI 15**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Décharg é |
| P/1 | ADR- Cod-P | n-cod | SGN-cod-P | Chargé | ADR-Dat-P | n-dat | SGN-dat-P/1 | Décharg é |
| P/2 | ADR- Cod-P | n-cod | SGN-cod-P | Chargé | ADR-Dat-P | n-dat | SGN-dat-P/2 | Décharg é |

Le système d'exploitation de la carte envoie alors au lecteur la commande suivante :

| | | | |
|---|---|---|---|
| Commande de rechargement à partir du réseau | Carte C | Appli P - Data - numéro de séquence 1 | nombre n-dat |

Cette commande diffère de la commande de rechargement déjà décrite en ce que la troisième case contient un paramètre spécifiant non seulement le code P de l'application, mais aussi le fait qu'il s'agit de données de type séquence (par le terme « Data »), et le numéro 1 de la séquence concernée.

Le lecteur reçoit la commande et la renvoie vers la banque de donnée affectée notamment à la carte C. La banque de donnée recherche dans le fichier de cette carte, les n-dat octets de données non exécutables relatives à l'application P, numéro de séquence 1. La banque de données élabore le message suivant, qui est la réponse à la dernière commande de la carte ; cette réponse est transmise à la carte via le lecteur :

| | | | |
|---|---|---|---|
| Carte C | Appli P - Data- numéro de séquence 1 | n-dat | n-dat octets de données |

Cette commande diffère de la réponse à une commande de rechargement déjà décrite en ce que la deuxième case contient un paramètre spécifiant non seulement le code P de l'application , mais aussi le fait qu'il s'agit de données de type séquence (par le terme « Data »), et le numéro 1 de la séquence concernée.

Le système d'exploitation de la carte peut effectuer une opération préliminaire selon laquelle il vérifie que les codes C, P, le numéro de séquence et la valeur n-dat reçus, sont bien identiques à ceux de la commande émise précédemment. Si l'identité est réalisée, les n-dat octets reçus sont mémorisés à partir de l'adresse ADR-dat-P lue dans le tableau TAB_APPLI . Une fois le dernier octet écrit, le système d'exploitation recalcule la signature des données à l'aide d'un calcul cryptographique utilisant la valeur de la clé SWAP. La signature recalculée est alors comparée à la valeur « SGN-dat-P/1 » écrite dans le tableau TAB_APPLI. Si les deux valeurs de signature ne seront pas égales, les données reçues du réseau sont considérées commee non identiques à celles déchargées précédemment. Il existe donc un doute sur l'authenticité ou l'intégrité des données reçues. La carte renvoie au lecteur un message d'erreur indiquant la réception de données erronées au cours de la dernière opération de chargement, et l'impossibilité de continuer la transaction.

Si les deux valeurs sont égales, les données reçues sont considérées comme identiques à celles précédemment déchargées par la carte : la première transaction peut donc continuer. Le système d'exploitation de la carte met ensuite à jour le tableau TAB_APPLI en positionnant l'indicateur des données de l'application P/1 à « Chargé » :

**tableau TAB_APPLI 16**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR- Cod-P | n-cod | SGN-cod-P | Chargé | ADR-Dat-P | n-dat | SGN-dat-P/1 | Chargé |
| P/2 | ADR-Cod-P | n-cod | SGN-cod-P | Chargé | ADR-Dat-P | n-dat | SGN-dat-P/2 | Déchargé |

La mise à jour du tableau TAB_APPLI étant terminée, le système d'exploitation lance l'application P qui va continuer la première transaction.

La première transaction étant terminée, l'exécution du programme de l'application se termine par un retour au système d'exploitation gérant la mémore virtuelle. Le système d'exploitation reconnaît alors la fin de la séquence « 1 » et décide de libérer la place mémoire correspondant aux données de la dite séquence. Pour cela, il efface les informations « adresse de stockage », « signature » et l'indicateur de chargement/déchargement en les mettant à la valeur zéro.

Le tableau TAB_APPLI a alors les valeurs suivantes :

**tableau TAB_APPLI 17**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR- Cod-P | n-cod | SGN-cod-P | Chargé | 0 | n-dat | 0 | 0 |
| P/2 | ADR- Cod-P | n-cod | SGN-cod-P | Chargé | ADR-Dat-P | n-dat | SGN-dat-P/2 | Déchargé |

Lorsque la carte reçoit la validation de la seconde transaction, le système d'exploitation de la carte reconnaît, à l'aide du numéro de séquence, que ce message concerne une autre transaction qui n'est pas chargée. La première transaction étant terminée, les données non exécutables correspondantes ne sont plus utiles. Il n'y a donc pas lieu de les décharger. Il suffit donc de charger les données non exécutables correspondant à la seconde transaction. Le système d'exploitation envoie au lecteur la commande suivante :

| | | | |
|---|---|---|---|
| Commande de rechargement à partir du réseau | Carte C | Appli P - Data - numéro de séquence 2 | nombre n-dat |

De même que pour le chargement de la séquence 1, le lecteur reçoit la commande et la renvoie vers la banque de donnée. La banque de donnée recherche, dans le fichier de cette carte, les n-dat octets de données non exécutables relatives à l'application P, numéro de séquence 2. La banque de données élabore le message suivant qui est transmis à la carte via le lecteur :

| | | | |
|---|---|---|---|
| Carte C | Appli P - Data- numéro de séquence 2 | nombre n-dat | n-dat octets de données |

Le système d'exploitation de la carte peut effectuer une opération préliminaire selon laquelle il vérifie les codes C, P, le numéro de séquence, et la valeur n-dat reçus. Si la vérification est conforme, les octets sont écrits. Ensuite, le système d'exploitation calcule et vérifie la signature des données. Si les deux valeurs sont égales, les données reçues sont considérées comme identiques à celles précédemment déchargées par la carte : la seconde transaction peut donc continuer. Le système d'exploitation met à jour le tableau TAB_APPLI en positionnant l'indicateur de chargement de l'application P/2 à « Chargé » :

**tableau TAB_APPLI 18**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR-Cod-P | n-cod | SGN-cod-P | Chargé | 0 | n-dat | 0 | 0 |
| P/2 | ADR- Cod-P | n-cod | SGN-cod-P | Chargé | ADR-Dat-P | n-dat | SGN-dat-P/2 | Chargé |

La mise à jour du tableau TAB_APPLI étant terminée, le système d'exploitation lance l'application P qui va continuer la seconde transaction.

La seconde transaction étant terminée, le programme de l'application se termine par une instruction de retour au système d'exploitation gérant la mémoire virtuelle. Le système d'exploitation en déduit que la séquence « 2 » est terminée ; la place mémoire peut alors être libérée. Pour cela, les emplacement, dans le tableau TAB_APPLI, de : « adresse de stockage », « signature » et l'indicateur de chargement/déchargement sont mis à zéro. Le tableau prend les valeurs suivantes:

**tableau TAB_APPLI 19**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| P/1 | ADR-Cod-P | n-cod | SGN-cod-P | Chargé | 0 | n-dat | 0 | 0 |
| P/2 | ADR- Cod-P | n-cod | SGN-cod-P | Chargé | 0 | n-dat | 0 | 0 |

A ce stade, le système d'exploitation de la carte peut effacer entièrement une ligne du tableau TAB_APPLI. La gestion des lignes du tableau TAB_APPLI s'effectue alors dynamiquement en fonction des besoins.

Une autre méthode statique pour gérer le tableau est de décider une fois pour toutes le nombre de séquences maximum exécutables pour une application : soit « s » ce nombre. « s » est alors transmis lors de la commande de chargement initial d'application : le système d'exploitation réserve dans le tableau TAB_APPLI la place correspondant à ces « s » séquences. Prenons par exemple pour s la valeur 2.

La commande de chargement de l'application K possède les valeurs suivantes :

| | | | | | |
|---|---|---|---|---|---|
| Ordre de Chargement | Carte C | Appli K | nombre n | | s=2 |
| | | | n-cod | n-dat | |

Cette commande diffère de celle décrite précédemment en ce qu'elle inclut une cinquième case définissant la valeur du paramètre s. On notera qu'ici la commande spécifie le nombre n-cod d'octets relatifs à l'application et envoyés par la commande, et le nombre n-dat d'octets relatifs à chaque séquence future et réservés à cet usage. En variante, le nombre n-dat d'octets peut ne pas être transmis à ce stade, mais fourni plus tard au système d'exploitation de la carte par l'application qui y est chargée.

A la suite de cette commande, le système d'exploitation met à jour le tableau TAB_APPLI avec les valeurs suivantes :

**tableau TAB_APPLI 20**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| K/1 | ADR- Cod-K | n-cod | SGN-cod-K | Chargé | 0 | n-dat | 0 | 0 |
| K/2 | ADR-Cod-K | n-cod | SGN-cod-K | Chargé | 0 | n-dat | 0 | 0 |

L'application K peut maintenant être exécutée : deux séquences sont possibles.

La carte peut parfaitement contenir de façon virtuelle plusieurs applications dotées chacune de plusieurs séquences. Par exemple, voici une configuration particulière du tableau TAB_APPLI :

**tableau TAB_APPLI 21**

| Code application / Numéro de séquence | Informations relatives au programme exécutable et aux données de l'application | | | | informations relatives aux données évolutives des séquences notées « i » | | | |
|---|---|---|---|---|---|---|---|---|
| | adresse de stockage | nombre d'octets | signature | Chargé./ Déchargé | adresse de stockage | nombre d'octets | signature | Chargé./ Déchargé |
| K/1 | ADR- Cod-K | k-cod | SGN-cod-K | Déchargé | 0 | k-dat | 0 | 0 |
| K/2 | ADR-Cod-K | k-cod | SGN-cod-K | Déchargé | ADR-Dat-K/2 | k-dat | SGN-dat-K/2 | Déchargé |
| K/1 | ADR- Cod-K | k-cod | SGN-cod-K | Déchargé | ADR-Dat-K/3 | k-dat | SGN-dat-K/3 | Chargé |
| J/1 | ADR- Cod-J | j-cod | SGN-cod-J | Chargé | ADR-Dat-J/1 | j-dat | SGN-dat-J1 | Chargé |
| J/2 | ADR- Cod-J | j-cod | SGN-cod-J | Chargé | ADR-Dat-J/2 | j-dat | SGN-dat-J/2 | Déchargé |

Correspondant à cet exemple, la carte possède virtuellement deux applications notées : K et J. Le programme exécutable de l'application K n'est pas en zone de chargement ; trois séquences de cette application, notées 1,2 et 3, peuvent s'exécuter en même temps. La première séquence est terminée, les deux autres sont en cours d'exécution. La séquence 2 est déchargée : il faudra donc la recharger pour la terminer. De plus, pour terminer les séquences 2 et 3, il faudra recharger le programme exécutable et les données de l'application K.

Le programme exécutable de l'application J est en zone de chargement ; cette application peut exécuter en même temps deux séquences, notées 1 et 2, qui sont en cours d'exécution. La séquence 2 est déchargée : il faudra la recharger pour la terminer.

De cet exemple, on voit apparaître la nécessité de bien gérer la place mémoire disponible. Il faut occuper le plus possible la zone de chargement et ainsi éviter le plus souvent les commandes de Déchargement et Rechargement.

Bien évidemment, l'amélioration consistant à chiffrer les données, en plus de les signer, lors du déchargement et à les déchiffrer lors du chargement/rechargement, peut s'appliquer à cette troisième amélioration.

Une amélioration de la procédure de chargement initial d'une application en carte consiste à introduire dans la carte une signature des informations applicatives calculée à partir d'une clé de fournisseur d'application. Cette signature permet de s'assurer de l'intégrité des informations applicatives et d'authentifier l'origine de ces données applicatives.

Le chargement initial selon l'amélioration consiste à présenter la carte au fournisseur d'application. Il est conseillé d'effectuer cette opération dans les locaux du fournisseur d'application. Ce dernier introduit dans la carte sa clé de fournisseur, la signature des informations applicatives, et le code de l'application, « K » par exemple. Un porteur de la carte effectue une demande de chargement initial de l'application K. Cette demande, qui a été décrite précédemment, peut être faite à son domicile. Une méthode pour effectuer de façon sécurisée le chargement initial d'une application est décrite dans le document FR-A-2.748.134.

Selon une variante de réalisation de l'invention , les applications stockées en carte ne sont pas déchargées dans une banque de données distante, au travers d'un réseau : c'est le lecteur 20 de la figure 2 qui reçoit et stocke ces applications ; il possède alors à cet effet une mémoire programmable non volatile dans laquelle sont stockées les applications. Les commandes de chargement et de déchargement sont inchangées. Cette variante est intéressante lorsque la carte est introduite toujours dans le même lecteur, par exemple un lecteur situé au domicile du porteur de carte.

Une autre variante de réalisation de l'invention utilise le lecteur de carte 40 et la carte à puce 41 de la figure 4, dont les éléments communs avec ceux de la figure 2 portent les mêmes références. La carte 41 se distingue de celle 21 de la figure 2 en ce qu'elle porte une piste optique 42, par exemple une piste à écriture et lecture par rayon laser. Quant au lecteur de carte 40, il se distingue de celui 20 en ce qu'il comporte un lecteur de piste optique 43, apte à lire et écrire des informations sur la piste optique 42, relié au microprocesseur 2 et aux mémoires 3,4.

Selon l'invention, la piste optique 42 est utilisée en tant que banque de données , au lieu de celles distantes 23 à 25 de la figure 1. En pratique, lors du déchargement d'une application depuis la carte 41, la carte transmet la commande de déchargement au lecteur de carte 40. Le lecteur de piste 43 reçoit les informations de l'application et les écrit sur la piste optique 42. Lors d'une commande de rechargement, le lecteur de carte active le lecteur de piste 43 pour qu'il prélève sur la piste optique 42 les informations de l'application : le lecteur de carte transmet ensuite ces informations au microprocesseur 9 de la carte pour que celui-ci les stocke dans la zone de chargement. Les commandes de chargement et de déchargement sont toutefois inchangées.
En variante, la piste optique est remplacée par un autre support à stockage de masse, par exemple une piste magnétique.

Dans les exemples de réalisation précédents, on a décrit un déchargement d'applications depuis un dispositif de traitement de l'information vers l'extérieur de celui-ci : dans le cas de la figure 2, la carte 21 effectuait un déchargement vers le lecteur 20 ou les banques de données 23-25 de la figure 1 ; dans le cas de la figure 4, le dispositif de traitement de l'information constitué par le microprocesseur 9 et ses mémoires 10,14 effectuait un déchargement vers la piste optique 42. Selon une autre variante de réalisation de l'invention, un dispositif de traitement de l'information effectue un déchargement entre plusieurs mémoires de ce dispositif. Par exemple, ce dispositif de traitement de l'information est constitué par la carte 21 de la figure 2 et le microprocesseur 9 décharge une application depuis sa mémoire RAM 14 vers sa mémoire non volatile 10.

Par exemple, plusieurs applications K, J sont stockées dans la mémoire non volatile 10. Tout d'abord, l'application K est exécutée. A cette occasion, des informations de travail ltₖ relatives à l'application K sont traitées en mémoire RAM, tandis qu'un programme de l'application K reste en mémoire non volatile 10. Ces informations de travail comprennent notamment:
- des variables de travail temporaires, intervenant dans des calculs;
- des variables de contexte, permettant à la carte de reprendre ultérieurement une exécution d'application interrompue;
- des sous-programmes.
A un moment donné, la carte doit exécuter l'autre application J et, pour cela, charger des informations de travail lt_{J} dans la mémoire RAM. Si la carte constate que l'espace libre dans la mémoire RAM est insuffisant pour recevoir les informations de travail lt_{J}, elle décide de stopper l'exécution de l'application K et de décharger les informations de travail ltₖ de l'application K dans sa mémoire non volatile 10. Puis elle exécute l'application J en chargeant les informations de travail lt_{J} associées en mémoire RAM. Après exécution de l'application J, la carte reprend l'exécution de l'application K, à l'endroit où celle-ci a été interrompue, en chargeant à nouveau les informations de travail ltₖ en mémoire RAM.

Dans cette dernière variante de l'invention, les commandes de chargement et de déchargement ne sont pas utilisées, puisque le dispositif de traitement de l'information concerné n'a pas à avertir un dispositif externe pour effectuer les opérations de chargement et déchargement de ses mémoires. Il possède encore un tableau TAB_APPLI, mais celui-ci est simplifié par rapport au tableau 2 précité : le paramètre « signature des informations » est supprimé. En effet, les informations ne sortant pas du dispositif de traitement de l'information, elles ne risquent pas d'être altérées durant leur déchargement.

Dans ce qui précède, on a surtout décrit la prise de décision, par la carte, du déchargement d'un ensemble d'informations suite à un ordre reçu par la carte de chargement d'un autre ensemble d'informations. On rappelle cependant que l'invention couvre aussi le cas où l'ordre reçu par la carte vise à exécuter une autre opération que le chargement d'un ensemble d'informations. Par exemple, un traitement particulier demandé à la carte peut requérir une place mémoire supérieure à l'espace actuellement disponible dans la mémoire de la carte : il peut s'agir notamment d'un calcul cryptographique. Dans ce cas, la carte décidera de décharger un ensemble d'informations pour pouvoir exécuter cette opération. Un autre exemple est celui où l'ordre reçu par la carte est un ordre d'exécution d'une application K qui a été précédemment déchargée de la carte. La carte doit donc recharger cette application pour l'exécuter: si la place mémoire est insuffisante pour ce rechargement, la carte va décider de décharger une autre application J, puis effectuer le rechargement de l'application K.

## Revendications

1. Carte à puce comprenant des moyens de traitement de l'information (9) et .des moyens de mémorisation de l'information principaux (10,14) pour stocker un programme, des données générales pour faire fonctionner ledit programme, et au moins un ensemble de données spécifiques de session relatif à une session particulière de l'exécution du programme, les moyens de traitement (9) comprennent :
- des moyens pour détecter, au cours du fonctionnement de la carte à puce, que les moyens de mémorisation principaux (10,14) contiennent une quantité d'informations telle que l'exécution d'une opération n'est pas possible ;
**caractérisée en ce que** les moyens de traitement (9) comprennent aussi:
- des moyens pour sélectionner, dans les moyens de mémorisation principaux, au moins un ensemble de données spécifiques de session dont le déchargement peut libérer dans les moyens de mémorisation principaux un espace suffisant pour autoriser l'exécution de ladite opération ;
- des moyens pour décharger ledit ensemble sélectionné de données spécifiques de session dans des moyens de mémorisation secondaires (23 à 25 ; 42 ; 53), dans le cas où lesdits moyens de mémorisation secondaires ne contiennent pas cet ensemble de données spécifiques de session.

2. Carte à puce selon la revendication 1, qui comprend un tableau de chargement (TAB_APPLI) stocké dans les moyens de mémorisation principaux et incluant un indicateur de stockage indiquant, pour au moins un ensemble de données spécifiques de session, si celui-ci est stocké ou non dans les moyens de mémorisation principaux, de sorte que, lorsque les moyens de traitement (9) doivent avoir accès à un ensemble de données spécifiques de session, ils consultent ledit indicateur de stockage : et
- dans un premier cas où l'indicateur de stockage indique que l'ensemble de données spécifiques de session est stocké, les moyens de traitement accèdent à ce dernier; ou
- dans un second cas où l'indicateur de stockage indique que l'ensemble de données spécifiques de session n'est pas stocké, les moyens de traitement envoient aux moyens de mémorisation secondaires (23 à 25 ; 42 ; 53) une commande de chargement de cet ensemble de données spécifiques de session.

3. Carte à puce selon la revendication 2, dans laquelle l'indicateur de stockage comporte un état chargé indiquant que l'ensemble de données spécifiques de session correspondant a été chargé dans la carte à puce à partir des moyens de mémorisation secondaires (23 à 25 ; 42 ; 53), et un état déchargé indiquant que l'ensemble de données spécifiques de session a été déchargé par la carte à puce dans les moyens de mémorisation secondaires.

4. Carte à puce selon la revendication 1, qui comprend un tableau de chargement (TAB_APPLI) stocké dans les moyens de mémorisation principaux (10,14) et incluant un indicateur de modification indiquant, pour au moins un ensemble de données spécifiques de session dont une première version a été chargée dans la carte à puce à partir des moyens de mémorisation secondaires (23 à 25 ; 42 ; 53), si cette première version a été modifiée ou non dans la carte à puce, de telle sorte que, lorsque cet ensemble de données spécifiques de session doit être déchargé dans les moyens de mémorisation secondaires, il n'est effectivement déchargé que si cette première version a été modifiée.

5. Carte à puce selon la revendication 1, qui comprend des moyens pour détecter plusieurs ensembles d'informations qui possèdent le même programme et les mêmes données générales pour faire fonctionner ledit programme (p-cod) ainsi que des ensembles respectifs différents de données spécifiques de session (p-dat), de sorte que la carte à puce ne stocke dans les moyens de mémorisation principaux (10,14) qu'une fois ledit programme et lesdites données générales (p-cod) et qu'elle associe à ce programme et ces données générales chacun des ensembles de données spécifiques de session (p-dat).

6. Carte à puce selon la revendication 5, qui comprend un tableau de chargement (TAB_APPLI) stocké dans les moyens de mémorisation principaux et incluant, pour chaque programme stocké, un nombre maximum (s) de d'ensemble de données spécifiques de session (p-dat) associés, pouvant être stockées dans les moyens de mémorisation principaux.

7. Carte à puce selon la revendication 1, qui comprend des moyens pour recharger dans les moyens de mémorisation principaux (10,14) un ensemble de données spécifiques de session préalablement déchargé dans les moyens de mémorisation secondaires (23 à 25 ; 42 ; 53).

8. Carte à puce selon la revendication 7, qui comprend un tableau de chargement (TAB_APPLI) stocké dans les moyens de mémorisation principaux (10,14) et incluant, pour au moins un ensemble de données spécifiques de session, une première signature (SGN-K) de cet ensemble d'informations calculée par les moyens de traitement (9) avant le déchargement éventuel de l'ensemble d'information, avec une clé de signature (SWAP) stockée dans les moyens de mémorisation principaux, les moyens de traitement étant agencés pour calculer une seconde signature de l'ensemble de données spécifiques de session rechargé, pour comparer cette seconde signature avec la première, pour valider le rechargement de l'ensemble de données spécifiques de session dans le cas où les deux signatures sont identiques, et pour invalider le rechargement de l'ensemble d'informations dans le cas où les deux signatures sont différentes.

9. Carte à puce selon une des revendications 1 à 8, comprenant des moyens pour effacer dans les moyens de mémorisation principaux (10,14) l'ensemble de données spécifiques de session sélectionné, dans le cas où lesdits moyens de mémorisation secondaires contiennent déjà cet ensemble de données.

10. Procédé de gestion de la mémoire dans une carte à puce comprenant des moyens de traitement de l'information (9) et des moyens de mémorisation de l'information principaux (10,14) pour stocker un programme, des données générales pour faire fonctionner ledit programme, et au moins un ensemble de données spécifiques de session relatif à une session particulière de l'exécution du programme, qu'il comprend les étapes consistant à :
- détecter, au cours du fonctionnement de la carte à puce, que les moyens de mémorisation principaux (10,14) contiennent une quantité d'informations telle que l'exécution d'une opération n'est pas possible:
**caractérisé en ce qu**'il comprend aussi les étapes consistant à:
- sélectionner, dans les moyens de mémorisation principaux, au moins un ensemble de données spécifiques de session, dont le déchargement peut libérer dans les moyens de mémorisation principaux un espace suffisant pour autoriser l'exécution de ladite opération ;
- décharger l'ensemble de données spécifiques de session dans des moyens de mémorisation secondaires (23 à 25 ; 42 ; 53), dans le cas où lesdits moyens de mémorisation secondaires ne contiennent pas cet ensemble de données spécifiques de session.

11. Procédé selon la revendication 10, qui comprend les étapes consistant à :
- détecter, au cours du fonctionnement de la carte à puce, que les moyens de mémorisation principaux (10,14) contiennent une quantité d'informations telle qu'un stockage supplémentaire d'un ensemble donné de données spécifiques de session préalablement déchargé est possible ;
- recharger dans les moyens de mémorisation principaux ledit ensemble de données spécifiques de session déchargé

12. Procédé selon la revendication 10, qui comprend les étapes consistant à :
- détecter, au cours du fonctionnement de la carte à puce, que les moyens de mémorisation principaux (10,14) contiennent une quantité d'informations telle qu'un stockage supplémentaire d'un ensemble donné de données spécifiques de session préalablement déchargé (K) n'est pas possible;
- sélectionner, dans les moyens de mémorisation principaux, un ensemble de données spécifiques de session à décharger (J), dont le déchargement peut libérer dans les moyens de mémorisation principaux un espace suffisant pour autoriser le stockage dudit ensemble de données spécifiques de session préalablement déchargé;
- décharger l'ensemble de données spécifiques de session à décharger (J) dans les moyens de mémorisation secondaires (23 à 25 ; 42 ; 53), dans le cas où lesdits moyens de mémorisation secondaires ne contiennent pas ledit ensemble de données spécifiques de session à décharger ; et
- recharger dans les moyens de mémorisation principaux ledit ensemble de données spécifiques de session préalablement déchargé(K).

13. Procédé selon la revendication 10, dans lequel lesdits moyens de mémorisation secondaires comprennent une banque de données (23-25) distante de la carte à puce et reliée à celle-ci par un réseau de transmission de données (26).

14. Procédé selon la revendication 10, dans lequel lesdits moyens de mémorisation secondaires appartiennent à un dispositif de traitement de l'information (20) coopérant avec la carte à puce (21).

15. Procédé selon la revendication 10, dans lequel lesdits moyens de mémorisation secondaires (42 ; 53) appartiennent à la carte à puce.

16. Procédé selon la revendication 10, utilisant un protocole de communication entre ladite carte à puce (21) et un lecteur (20) de carte à puce, ledit procédé comprenant les étapes consistant en ce que :
- le lecteur (20) transmet à la carte (21) un ordre d'exécution d'une opération;
- la carte (21) recherche si, pour exécuter cette opération, elle dispose d'une place suffisante dans les moyens de mémorisation principaux ;
- dans l'affirmative, la carte (21) exécute ladite opération puis transmet un compte-rendu d'exécution au lecteur (20) ;
- dans la négative, la carte (21) effectue la sélection dudit ensemble de données spécifiques de session dont le déchargement peut libérer dans les moyens de mémorisation principaux un espace suffisant pour autoriser l'exécution de ladite opération, puis la carte décharge l'ensemble sélectionné dans des moyens de mémorisation secondaires en transmettant un ordre de déchargement au lecteur (20), dans le cas où lesdits moyens de mémorisation secondaires (23 à 25 ; 42 : 53) ne contiennent pas ledit ensemble sélectionné, puis elle exécute ladite opération puis transmet enfin un compte-rendu d'exécution au lecteur (20).

17. Procédé selon la revendication 16, dans lequel ladite opération est un chargement d'un ensemble de données spécifiques de session à stocker (J), les étapes consistant en ce que :
- le lecteur (20) transmet à la carte(21) un ordre de chargement dudit ensemble de données spécifiques de session à stocker (J) ;
- la carte (21) recherche si, pour exécuter cet ordre de chargement, elle dispose d'une place suffisante dans les moyens de mémorisation principaux ;
- dans l'affirmative, la carte (21) exécute l'ordre de chargement puis transmet un compte-rendu d'exécution au lecteur (20) ;
- dans la négative, la carte (21) :
- transmet au lecteur (20) un ordre de suspension du chargement ;
- sélectionne dans les moyens de mémorisation principaux au moins un ensemble de données spécifiques de session à décharger (K) dont le déchargement peut libérer dans les moyens de mémorisation principaux un espace suffisant pour autoriser l'exécution de l'ordre de chargement ;
- décharge ledit ensemble sélectionné dans les moyens de mémorisation secondaires en transmettant un ordre de déchargement au lecteur, dans le cas où lesdits moyens de mémorisation secondaires (23 à 25 ; 42 ; 53) ne contiennent pas cet ensemble de données spécifiques de session;
- transmet au lecteur (20) un ordre de reprise du chargement ;
- exécute ledit chargement puis transmet un compte-rendu d'exécution au lecteur (20).

18. Procédé selon la revendication 16, dans lequel ledit ordre d'exécution d'une opération consiste, pour le lecteur (20), à déclencher une alimentation en énergie électrique de la carte (21).

## Claims

1. A chip card comprising information processing means (9) and main information storage means (10,14) for storing a program, general data to make the said program operate and at least one set of specific session data relating to a particular session of execution of the program, which processing means (9) comprise:
- means to detect, while the chip card is operating, that the main storage means (10,14) contain a quantity of information that is such that the execution of an operation is not possible; **characterised in that** the processing means (9) further comprise:
- means to select from the main storage means, at least one set of specific session data, the unloading of which can free up sufficient space in the main storage means to allow the execution of the said operation;
- means to unload the said selected set of specific session data into secondary storage means (23 to 25, 42, 53), if the said secondary storage means do not contain that set of specific session data.

2. A chip card according to claim 1, which comprises a loading table (TAB_APPLI) stored in the main storage means and includes a storage indicator that shows, for at least one set of specific session data, if it is or not stored in the main storage means, so that when the processing means (9) need to have access to a set of specific session data, they consult the said storage indicator; and
- in the first case where the storage indicator indicates that the set of specific session data is stored, the processing means access that set of data; or
- in the second case where the storage indicator indicates that the set of specific session data is not stored, the processing means send to the secondary storage means (23 to 25; 42; 53) a command to load that set of specific session data.

3. A chip card according to claim 2, where the storage indicator comprises a loaded state indicating that the corresponding set of specific session data has been loaded in the chip card from the secondary storage means (23 to 25; 42; 53) and an unloaded state indicating that the set of specific session data has been unloaded by the chip card into the secondary storage means.

4. A chip card according to claim 1, which comprises a loading table (TAB_APPLI) stored in the main storage means (10,14) and includes a modification indicator indicating, for at least one set of specific session data, a first version of which has been loaded in the chip card from the secondary storage means (23 to 25; 42; 53), whether that first version has or not been modified in the chip card, so that when the set of specific session data must be unloaded into the secondary storage means, it is only effectively unloaded if the first version has been modified.

5. A chip card according to claim 1, which comprises means to detect several sets of information having the same program and the same general data to make the said program (p-cod) operate and the respective different sets of specific session data (p-dat), so that the chip card only stores in the main storage means (10,14) the said program and the said general data (p-cod) only once and associates each of the sets of specific session data (p-dat) with that program and general data.

6. A chip card according to claim 5, which comprises a loading table (TAB_PPLI) stored in the main storage means and includes, for each stored program, a maximum number (s) of associated sets of specific session data (p-dat) that may be stored in the main storage means.

7. A chip card according to claim 1, which comprises means for reloading in the main storage means (10,14) a set of specific session data that is first unloaded into the secondary storage means (23 to 25; 42; 53).

8. A chip card according to claim 7, which comprises a loading table (TAB_PPLI) stored in the main storage means (10,14) and includes, for at least one set of specific session data, a first signature (SGN-K ) of that set of data calculated by the processing means (9) before the possible unloading of the data set, with a signature key (SWAP) stored in the main storage means, the processing means being designed to calculate a second signature of the reloaded set of specific session data, so as to compare the second signature with the first one, validate the reloading of the set of specific session data if the two signatures are identical and invalidate the reloading of the set of data if the two signatures are different.

9. A chip card according to any of claims 1 to 8, comprising means to erase from the main storage means (10,14) all the selected specific session data, if the said secondary storage means already contain that set of data.

10. A method for managing the memory in a chip card comprising information processing means (9) and main information storage means (10,14) for storing a program, general data to make the said program operate and at least one set of specific session data relating to a particular session of the execution of the program, comprising the steps consisting in:
- detecting, while the chip card is operating, that the main storage means (10,14) contain a quantity of data such that the execution of an operation is not possible; **characterised in that** it also comprises the steps consisting in:
- selecting, from the main storage means, at least one set of specific session data, the unloading of which can free up in the main storage means sufficient space to allow the execution of the said operation;
- unloading the set of specific session data into the secondary storage means (23 to 25; 42; 53), if the said secondary storage means do not contain that set of specific session data.

11. A method according to claim 10, which comprises the steps consisting in:
- detecting, during the working of the chip card, that the main storage means (10,14) contain a quantity of data such that the additional storage of a given set of specific session data that is first unloaded is possible;
- reloading into the main storage means the said unloaded set of specific session data.

12. A method according to claim 10, which comprises the stages consisting in:
- detecting, while the chip card is operating, that the main storage means (10,14) contain a quantity of data such that the additional storage of a given set of specific session data that has first been unloaded (K) is not possible;
- selecting, from the main storage means, a set of specific session data to be unloaded (J), the unloading of which can free up in the main storage means sufficient space to allow the storage of the said set of specific session data that have first been unloaded;
- unloading the set of specific session data to be unloaded (J) into the secondary storage means (23 to 25; 42; 53) if the said secondary storage means do not contain the said set of specific session data to be unloaded; and
- reloading in the main storage means the said set of specific session data that have first been unloaded (K).

13. A method according to claim 10, where the said secondary storage means comprise a data bank (23-25) remote from the chip card and connected to it by means of a data transmission network (26).

14. A method according to claim 10, where the said secondary storage means belong to a data processing device (20) cooperating with the chip card (21).

15. A method according to claim 10, where the said secondary storage means (42; 53) belong to the chip card.

16. A method according to claim 10, using a protocol for communication between the said chip card (21) and a chip card reader (20), the said method comprising the steps consisting in that:
- the reader (20) sends to the card (21) an order to execute an operation;
- the card (21) sees if it has sufficient space in the main storage means to execute the operation;
- if it does, the card (21) executes the said operation and sends an execution report to the reader (20);
- if it does not, the card (21) selects the said set of specific session data, the unloading of which can free up in the main storage means space sufficient to allow the execution of the said operation, then the card unloads the selected set into the secondary storage means by sending an unloading order to the reader (20), in the case where the said secondary storage means (23 to 25; 42; 53) do not contain the said selected set, then it executes the said operation and lastly sends a report of execution to the reader (20).

17. A method according to claim 16, where the said operation is the loading of a set of specific session data to be stored (J), the steps consisting in that:
- the reader (20) sends to the card ((21) an order to load the said set of specific session data to be stored (J);
- the card (21) sees if it has sufficient space in the main storage means to execute the loading order;
- if it does, the card (21) executes the loading and sends a report of execution to the reader (20);
- if it does not, the card (21) :
- sends the reader (20) an order to suspend loading;
- selects from the main storage means at least one set of specific session data to be unloaded (K) where the unloading can free up in the main storage means space sufficient to allow the execution of the loading order;
- unloads the said selected set into the secondary storage means by sending an unloading order to the reader, if the said secondary storage means (23 to 25; 42; 53) do not contain the set of specific session data;
- sends the reader (20) an order to resume loading;
- executes the said loading and sends a report of execution to the reader (20).

18. A method according to claim 16, where the said order to execute an operation consists, for the reader (20), in triggering off a supply of electrical power to the card (21) .

## Patentansprüche

1. Chipkarte, die Datenbearbeitungsmittel (9) sowie Hauptmittel für die Informationsbearbeitung (10, 14) für eine Programmabspeicherung, sowie allgemeine Daten, um das Programm zu betreiben, und mindestens einen spezifischen Datensatz, der eine besondere Verbindung für die Programmausführung betrifft umfasst, wobei die Bearbeitungsmittel (9) folgendes umfassen
- Mittel, um beim Betrieb der Chipkarte zu erfassen, ob die Hauptspeichermittel (10,14) eine solche Informationsmenge enthalten, dass die Ausführung eines Arbeitsvorgangs nicht möglich ist;
**dadurch gekennzeichnet, dass** die Bearbeitungsmittel auch folgendes umfassen
- Mittel, um unter den Hauptspeichermitteln mindestens einen verbindungsspezifischen Datensatz auszuwählen, dessen Entladung in den Hauptspeichermitteln einen ausreichenden Raum freigeben kann, um die Ausführung des genannten Arbeitsvorgangs zuzulassen;
- Mittel, um den genannten ausgewählten verbindungsspezifischen Datensatz in Nebenspeichermittel (23 bis 25; 42; 53) zu entladen, falls die genannten Nebenspeichermittel diesen verbindungsspezifischen Datensatz nicht enthalten.

2. Chipkarte nach Anspruch 1, die eine in den Hauptspeichermitteln gespeicherte Ladetabelle (TAB APPLI) umfasst, die eine Speicheranzeige einschließt, welche für mindestens einen verbindungsspezifischen Datensatz angibt, ob dieser in den Hauptspeichermitteln gespeichert ist oder nicht, derart, dass wenn die Bearbeitungsmittel (9) auf einen verbindungsspezifischen Datensatz Zugriff haben müssen, sie die genannte Speicheranzeige abfragen: und
- in einem ersten Fall, in welchem die Speicheranzeige anzeigt, dass der verbindungsspezifische Datensatz abgespeichert ist, greifen die Bearbeitungsmittel auf diesen zu, oder
- in einem zweiten Fall, in welchem die Speicheranzeige anzeigt, dass der verbindungsspezifische Datensatz nicht abgespeichert ist, senden die Bearbeitungsmittel den Nebenspeichermitteln (23 bis 25; 42; 53) einen Speicherbefehl für die Speicherung dieses verbindungsspezifischen Datensatzes zu.

3. Chipkarte nach Anspruch 2, in welcher die Speicheranzeige einen Ladezustand, der anzeigt, dass der entsprechende verbindungsspezifische Datensatz von den Nebenspeichermitteln (23 bis 25; 42; 53) in die Chipkarte aufgeladen wurde, und einen Entladezustand aufweist, der anzeigt, dass der verbindungsspezifische Datensatz von der Chipkarte in die Nebenspeichermittel geladen wurden.

4. Chipkarte nach Anspruch 1, die eine in den Hauptspeichermitteln (10, 14) gespeicherte Ladetabelle (TAB APPLI) umfasst, und eine Änderungsanzeige einschließt, welche für mindestens einen verbindungsspezifischen Datensatz, von welchem eine erste Fassung von den Nebenspeichermitteln (23 bis 25 ; 42 ; 53) in die Chipkarte geladen wurde angibt, ob diese erste Fassung in der Chipkarte geändert wurde oder nicht, derart, dass wenn dieser verbindungsspezifische Datensatz in die Nebenspeichermittel entladen werden muss, dieser tatsächlich nur entladen wird, wenn die erste Fassung geändert wurde.

5. Chipkarte, nach Anspruch 1, die Mittel umfasst, um mehrere Informationssätze zu erfassen die dasselbe Programm und dieselben allgemeinen Daten, um das genannte Programm (p-cod) zu betreiben sowie jeweilige verschiedene verbindungsspezifische Datensätze (p-dat) besitzen, derart dass die Chipkarte nur ein Mal das genannte Programm und die genannten allgemeinen Daten (p-cod) in die Hauptspeichermittel (10, 14) abspeichert, und dass sie diesem Programm und diesen allgemeinen Daten jeden der verbindungsspezifischen Datensätze zuordnet.

6. Chipkarte nach Anspruch 5, die eine in den Hauptspeichermitteln gespeicherte Ladetabelle (TAB APPLI) umfasst, und für jedes abgespeichertes Programme eine Maximalanzahl (n) von zugeordneten verbindungsspezifischen Datensätzen (p-dat) einschließt, die in die Hauptspeichermittel abgespeichert werden kann.

7. Chipkarte nach Anspruch 1, welche Mittel umfasst, um in die genannten Hauptspeichermittel (10, 14) einen bereits in die Nebenspeichermittel (23 bis 25; 42; 53) entladenen verbindungsspezifischen Datensatz wiederzuladen.

8. Chipkarte nach Anspruch 7, die eine in den Hauptspeichermitteln (10, 14) gespeicherte Ladetabelle (TAB APPLI) umfasst, und für mindestens einen verbindungsspezifischen Datensatz eine erste von den Bearbeitungsmitteln (9) vor dem eventuellen Entladen des Informationssatzes berechnete Unterschrift (SGN-K) einschließt, mit einem in den Hauptspeichermitteln gespeicherten Unterschriftsschlüssel (SWAP), wobei die Bearbeitungsmittel derart angeordnet sind, um eine zweite Unterschrift für den wiedergeladenen verbindungsspezifischen Datensatz zu berechnen, um diese zweite Unterschrift mit der ersten zu vergleichen, um das Wiederladen des verbindungsspezifischen Datensatzes freizugeben, falls die zwei Unterschriften identisch sind, und um das Wiederladen des Informationssatzes zu sperren, falls die zwei Unterschriften verschieden sind.

9. Chipkarte nach einem der Ansprüche 1 bis 8, die Mittel umfasst, um in den Hauptspeichermitteln (10, 14) den gewählten verbindungsspezifischen Datensatz zu löschen, im Fall dass die genannten Nebenspeichermittel diesen Datensatz bereits enthalten.

10. Verfahren zur Speicherverwaltung in einer Chipkarte, die Informationsbearbeitungsmittel (9) und Hauptspeichermittel (10, 14), um ein Programm zu speichern, allgemeine Daten um das genannte Programm zu betreiben und mindestens einen verbindungsspezifischen Datensatz über eine besondere Verbindung für die Programmausführung umfasst, das die folgenden Schritte umfasst:
- erfassen, ob beim Betrieb der Chipkarte die Hauptspeichermittel (10,14) eine solche Informationsmenge enthalten, dass die Ausführung eines Arbeitsvorgangs nicht möglich ist;
**dadurch gekennzeichnet, dass** es auch die folgenden Schritte umfasst:
- unter den Hauptspeichermitteln mindestens einen verbindungsspezifischen Datensatz auswählen, dessen Entladung in den Hauptspeichermitteln einen ausreichenden Raum freigeben kann, um die Ausführung des genannten Arbeitsvorgangs zuzulassen;
- den genannten ausgewählten verbindungsspezifischen Datensatz in Nebenspeichermittel (23 bis 25; 42; 53) entladen, falls die genannten Nebenspeichermittel diesen verbindungsspezifischen Datensatz nicht enthalten.

11. Verfahren nach Anspruch 10, das auch folgende Schritte umfasst
- erfassen, ob beim Betrieb der Chipkarte die Hauptspeichermittel (10, 14) eine solche Informationsmenge enthalten, dass die zusätzliche Speicherung eines bereits entladenen verbindungsspezifischen Datensatzes möglich ist;
- den genannten entladenen verbindungsspezifischen Datensatz in die Hauptspeichermittel wiederzuladen.

12. Verfahren nach Anspruch 10, das die Schritte umfasst:
erfassen, ob beim Betrieb der Chipkarte die Hauptspeichermittel (10, 14) eine solche Informationsmenge enthalten, dass die zusätzliche Speicherung eines bereits entladenen zusätzlichen verbindungsspezifischen Datensatzes (K) nicht möglich ist;
- unter den Hauptspeichermitteln mindestens einen zu entladenen verbindungsspezifischen Datensatz (J) auswählen, dessen Entladung in den Hauptspeichermitteln einen ausreichenden Raum freigeben kann, um die Speicherung des genannten bereits entladenen verbindungsspezifischen Datensatzes zuzulassen;
- den genannten zu entladenen verbindungsspezifischen Datensatz (J) in die Nebenspeichermittel (23 bis 25; 42; 53) entladen, falls die genannten Nebenspeichermittel den genannten zu entladenden verbindungsspezifischen Datensatz nicht enthalten ; und
- den genannten bereits entladenen verbindungsspezifischen Datensatz (K) wieder in die in die Hauptspeichermittel laden.

13. Verfahren nach Anspruch 10, in welchem die genannten Nebenspeichermittel eine von der Chipkarte entfernte und mit dieser über ein Datenübertragungsnetz (26) verbundene Datenbank (23 - 25) umfassen.

14. Verfahren nach Anspruch 10, in welchem die genannten Nebenspeichermittel einer Informationsbearbeitungsvorrichtung (20) gehören, die mit der Chipkarte (21) zusammenarbeitet.

15. Verfahren nach Anspruch 10, in welchem die genannten Nebenspeichermittel (42 - 53) der Chipkarte gehören.

16. Verfahren nach Anspruch 10, das ein Kommunikationsprotokoll zwischen der genannten Chipkarte (21) und einem Chipkartenleser (20) benutzt, wobei das genannte Verfahren folgende Schritte umfasst
- der Leser (20) übermittelt an die Karte (21) einen Ausführungsbefehl für die Ausführung eines Vorgangs
- die Karte (21) ermittelt ob sie in den Hauptspeichermittel über ausreichend Platz verfügt um diesen Vorgang auszuführen;
- ist dies der Fall, dann führt die Karte (21) den genannten Vorgang aus und sendet an den Leser (20) einen Ausführungsbericht;
- ist dies nicht der Fall, dann trifft die Karte (21) die Auswahl des genannten verbindungsspezifischen Datensatzes dessen Entladung in den Hauptspeichermitteln einen ausreichenden Raum freigeben kann, um die Ausführung des genannten Vorgangs zuzulassen, danach entladet die Karte den ausgewählten Satz in Nebenspeichermitteln, indem sie an den Leser (20) einen Befehl übermittelt, falls die genannten Nebenspeichermittel (23 bis 25; 42; 53) den genannten Datensatz nicht enthalten, und sie führt den genannten Vorgang aus, und übermittelt letztendlich an den Leser (20) einen Ausführungsbericht.

17. Verfahren nach Anspruch 16, in welchem der genannte Vorgang in dem Ladevorgang eines zu speichernden verbindungsspezifischen Datensatzes (J) besteht, mit den folgenden Schritten
- der Leser (20) übermittelt an die Karte (21) einen Ladebefehl für den genannten zu speichernden verbindungsspezifischen Datensatz (J);
- die Karte (21) ermittelt ob sie in den Hauptspeichermitteln über ausreichend Platz verfügt, um diesen Ladebefehl auszuführen;
- ist dies der Fall, dann führt die Karte (21) den genannten Ladevorgang aus und sendet an den Leser (20) einen Ausführungsbericht;
- ist dies nicht der Fall, dann
- übermittelt die Karte (21) an den Leser (20) einen Unterbrechungsbefehl für den Ladevorgang;
- wählt sie unter den Hauptspeichermitteln mindestens einen zu entladenden verbindungsspezifischen Datensatz (K) aus, dessen Entladung in den Hauptspeichermitteln einen ausreichenden Raum freigeben kann, um die Ausführung des Ladebefehls zuzulassen;
- entladet sie den genannten ausgewählten verbindungsspezifischen Datensatz in die Nebenspeichermittel, falls die genannten Nebenspeichermittel (23 à 25 ; 42 ; 53) diesen verbindungsspezifischen Datensatz nicht enthalten, indem sie an den Leser einen Entladungsbefehl übermittelt;
- übermittelt sie an den Leser (20) einen Wiederaufnahmebefehl für den Ladevorgang;
- führt sie den genannten Ladevorgang aus und sendet an den Leser (20) einen Ausführungsbericht.

18. erfahren nach Anspruch 16, in welchem der genannte Ausführungsbefehl eines Vorgangs für den Leser (20) darin besteht, eine elektrische Energieversorgung der Karte (21) auszulösen.
